# EUROPEAN PATENT SPECIFICATION

(11) **EP 3 702 655 B1**
(45) Date of publication and mention of the grant of the patent: **13.09.2023**
(21) Application number: 18869504.3
(22) Date of filing: 19.10.2018
(51) Int. Cl.: F16L 11/12, A62C 33/00, F16L 11/127, F16L 55/00, F03B 13/00

(54) **WATER FEED HOSE PROVIDED WITH POWER SUPPLY**
WASSERZULAUFSCHLAUCH MIT STROMVERSORGUNG
TUYAU D'ALIMENTATION EN EAU POURVU D'UNE ALIMENTATION ÉLECTRIQUE

(30) Priority: 23.10.2017 JP 2017204620
(43) Date of publication of application: 02.09.2020
(73) Proprietor: Sakura Rubber Co., Ltd., Shibuya-ku, Tokyo 151-8587 (JP)
(72) Inventor: NAKAMURA, Hiroshi, Tokyo 151-8587 (JP); CHIBA, Kenji, Tokyo 151-8587 (JP); TOSHIRO, Kenzou, Tokyo 151-8587 (JP); MIYAZAWA, Misao, Tokyo 151-8587 (JP)
(74) Representative: Meissner Bolte Partnerschaft mbB
(86) International application number: PCT/JP2018/039074
(87) International publication number: WO 2019/082822

(56) References cited:
- WO-A1-2013/076794
- WO-A1-2015/087764
- JP-A- H06 505 542
- JP-A- H11 153 280
- JP-A- H11 247 753
- JP-A- 2001 309 579
- JP-A- 2002 266 742
- JP-A- 2003 269 683
- JP-A- 2004 176 558
- JP-A- 2004 293 499
- JP-A- 2011 075 080
- JP-A- 2011 117 597
- JP-U- H0 460 251
- JP-U- H0 558 159
- US-A1- 2013 098 478
- US-A1- 2014 265 336

## Description

### Technical Field

The present invention relates generally to a connector provided in an end part of a hose or a water feed hose comprising a power supply in the vicinity and an intermediary unit comprising a power supply and connected to a water feed hose.

### Background Art

A fire hose is laid from a pumper truck to the origin of a fire in a firefighting operation. In particular, in a building fire or the scene of fire at night, a fire hose is drawn to a place out of illumination. Firefighters carry an illumination device such as a flashlight. However, during a firefighting operation in a building and after extinction, the surrounding is full of smoke, and the visibility is poor. A fire hose comprises a phosphorescent material or a reflective material in a lateral part to enable firefighters to easily find a way to escape.

Patent Literature 1 discloses a power generation illumination device comprising a water wheel which is rotated by the flow of water of a fire hose in a joint portion and configured to supply electric power to an illuminating lamp by connecting a power generation device to the water wheel and generating electric power. The power generation illumination device attached to the connection portion of the fire hose comprises a socket connectable to a searchlight in addition to the illuminating lamp mounted on the joint portion.

Patent literature 2 describes a fire hose coupling apparatus for self-powered lighting of an area where a fire fighter is engaged in fires suppression with a fire hose, and for providing real time environmental data to fire fighters.

Patent literature 3 describes a generator having a coupling adapted to couple at least two fluid conduits together; an axial flow channel defined by the hose coupling and having an axis; a conductive coil in the hose coupling enveloping the axial flow channel; a rotor rotatable relative to the conductive coil and encircled by the conductive coil; a plurality of vanes coupled to the rotor and projecting radially toward the axis, but not intersecting the axis.

### Citation List

### Patent Literature

Patent Literature 1: JP H05-058159 A
Patent Literature 2: US 2013/098478 A1
Patent Literature 3: US 2014/265336 A1

### Summary of Invention

### Technical Problem

When the power generation device is driven by the flow of water in the hose as disclosed in Patent Literature 1, while water is discharged, water flows through the hose, and electric power is generated. However, when discharge is stopped, electric power is not generated. Thus, the illumination, etc., cannot be used when firefighters escape after firefighting. As the number of connected portions from a pumper truck to a pipe spear (discharge nozzle) is increased, more water wheels for power generation are provided, and thus, the flow resistance is increased. In other words, the force of discharged water is decreased.

More than one fire departments may battle a fire at the same time depending on the scale of the fire. In this case, the fire departments need to know the department which is in charge of the place of the origin of the fire and to which fire department the laid fire hose belongs.

In case of water feed hoses used to supply or discharge water, not permanently, but for a certain period, as well as fire hoses, it is necessary to confirm the connection state and monitor the state of water supply to continue to safely use the hoses.

The present invention provides a water feed hose and an intermediary unit made multifunctional by mounting a power supply and using the electric power obtained from the power supply.

### Solution to Problem

According to an embodiment of the present invention, a water feed hose comprises a hose, a connector, a power generation unit, a secondary battery, a power supply circuit, an electronic unit and a main switch. The connector is fixed to an end part of the hose. The power generation unit generates electric power in a state attached to the connector or the hose. The secondary battery is charged with the electric power generated by the power generation unit. The power supply circuit supplies, at a preset current and voltage, the electric power stored in the secondary battery or the electric power generated by the power generation unit. The electronic unit operates with the electric power supplied via the power supply circuit. The main switch switches the power supply circuit to a state in which electric power is supplied to the electronic unit.

The power generation unit may include a hydroelectric power generation unit comprising an induction coil, a rotor, permanent magnets and ribs. The induction coil comprises a plurality of coil portions wound based on a radial line perpendicular to a central axis of the connector such that the coil portions are provided in a circumferential direction in an outer circumference of the connector. The rotor is rotatably provided along an inner circumferential surface of the connector and includes a cylindrical portion comprising a structure for preventing the rotor from being washed away by a flow of water in a direction along the central axis for the connector. The structure is provided on an outer circumferential surface side. The permanent magnets are provided in a circumferential direction on an outer circumferential surface of the cylindrical portion and generate magnetic fields, respectively, in the radial direction. The ribs are provided along an inner circumferential surface of the cylindrical portion and are inclined in a circumferential direction from a position parallel to the central axis. A member for preventing the rotor from being washed away for the connector is not provided inside the cylindrical portion. In this structure, the hydroelectric power generation unit generates electric power when water flows through the hose and the rotor is rotated in a single direction.

The power generation unit may include a vibration power generation unit comprising an induction coil, a movable element, a permanent magnet and an elastic member, and generating electric power from displacement of the movable element due to vibration of the connector. The induction coil is fixed to the connector. The movable element is movable in a direction crossing a winding central line of the induction coil. The permanent magnet is mounted on the movable element such that a magnetic line of force is along the winding central line of the induction coil. The elastic member connects the movable element to the connector so as to vibrate in a direction in which a magnetic field for the induction coil changes.

The power generation unit may include a piezoelectric element which generates electric power from a collision load applied when an other-side connector fitted into the connector is connected to the connector.

The power generation unit may include a piezoelectric material provided in an outer circumference of the connector and generating electric power from a collision load applied from outside and accompanied by deformation.

The power generation unit may include a hydroelectric power generation unit comprising an induction coil, a rotor and permanent magnets. The induction coil comprises a plurality of coil portions wound based on a radial line perpendicular to a central axis of the connector such that the coil portions are provided in a circumferential direction in an outer circumference of the connector. The rotor is provided along an inner circumferential surface of the connector and is rotated when water flows through the hose. The permanent magnets are provided in a circumferential direction of the rotor and generate magnetic fields, respectively, in the radial direction. In this structure, the hydroelectric power generation unit generates electric power when water flows through the hose and the rotor is rotated in a single direction. The induction coil also functions as a feed coil supplied with electric power by electromagnetic induction while the connector is provided in an AC magnetic field generated by an external device. Electric power supplied via the induction coil functioning as the feed coil is stored in the secondary battery.

The power generation unit may include a plurality of ball-like light power generation elements which generate electric power from external light. In this case, the hose includes a jacket woven from a yarn material including the light power generation elements, and a liner provided as an interior of the jacket, and may be configured to be crushed into a flat shape comprising a pair of bent ear portions and a pair of abdomen portions between the ear portions in a state where no hydraulic pressure is applied to inside. The yarn material including the light power generation elements may be used as warp extending in a length direction of the hose in the abdomen portions.

The power generation unit may include an elastic power generation element attached to the hose and generating electric power when the hose expands or retracts or vibrates. For example, the hose is crushed into a flat shape comprising a pair of ear portions and a pair of abdomen portions between the ear portions in a state where no hydraulic pressure is applied to inside of the hose, and no stress is applied to the elastic power generation element in this state. In a state where hydraulic pressure is applied to the inside of the hose, the hose expands such that its cross-sectional surface is circular, and the elastic power generation element is extended, thereby generating electric power.

The power generation unit may include a thermoelectric element comprising a first surface facing the hose, a second surface on a side opposite to the first surface, a negative electrode provided on the first surface, a positive electrode provided on the second surface, an n-type semiconductor connected to the negative electrode and the positive electrode, and a p-type semiconductor connected to the negative electrode and the positive electrode. The thermoelectric element generates electric power from a difference in temperature between the first surface and the second surface in a state where a temperature of the first surface is made low by water flowing through the hose and a temperature of the second surface is made high by external heat.

The electronic unit includes a light source including at least one of an LED and an organic EL, and a light emission control unit which controls a pattern for causing the light source to emit light. The light sources are arranged in a circumferential direction on an outer surface of the connector. The light sources are arranged in an axial direction on an outer surface of the connector. The electronic unit comprises a connection detection switch which outputs a connection signal when an other-side connector fitted into the connector is connected, and the light emission control unit may change the pattern for causing the light source to emit light when the connection signal is detected. At this time, the pattern for causing the light source to emit light includes at least one of blinking time intervals for repeating turning on and off, when a plurality of light sources are provided, a portion to be lighted up, and a light emission color of each light source.

The electronic unit may include at least one of a temperature sensor which measures a temperature of the connector, a water temperature sensor which measures a temperature of water flowing through the hose, a flow sensor which measures a flow rate of water flowing through the hose, and a pressure sensor which measures a pressure inside the hose, a control unit which outputs state information including a value measured by at least one of these sensors, and a display unit fixed to outside of the connector and displaying the state information.

The electronic unit may include a connection detection switch which outputs a connection signal when an other-side connector fitted into the connector is connected, a memory which stores individual identification information of the connector, a control unit which outputs connection information in which the individual identification information is associated with the connection signal, and a communication unit which wirelessly transmits the connection information. The control unit may be configured to output the connection information when a control signal is received from outside via the communication unit.

The electronic unit may include at least one of a temperature sensor which measures a temperature of the connector, a water temperature sensor which measures a temperature of water flowing through the hose, a flow sensor which measures a flow rate of water flowing through the hose, and a pressure sensor which measures a pressure inside the hose, a memory which stores individual identification information of the connector, a control unit which outputs state information in which a value measured by at least one of these sensors is associated with the individual identification information, and a communication unit which wirelessly transmits the state information. The control unit may be configured to output the state information when a control signal is received from outside via the communication unit.

The electronic unit may operate when an activation signal is received from outside via the communication unit, and the electronic unit may transition to a standby state in which power consumption other than power consumption for reception in the communication unit is reduced when a standby signal is received from outside via the communication unit.

The electronic unit may include a positioning unit which calculates and outputs coordinates of position based on a GPS signal or a signal obtained from a surrounding Wi-Fi base. In this case, the control unit outputs location information in which the individual identification information is associated with the coordinates of position, and the wireless communication unit transmits the location information.

The electronic unit should preferably operate when an activation signal is received from outside via the communication unit, and the electronic unit should preferably transition to a standby state in which power consumption other than power consumption for reception in the communication unit is reduced when a standby signal is received from outside via the communication unit.

The electronic unit may include a positioning unit which calculates and outputs coordinates of position based on a GPS signal or a signal obtained from a surrounding Wi-Fi base. The control unit may output location information in which the individual identification information is associated with the coordinates of position, and the communication unit may wirelessly transmit the location information.

### Advantageous Effects of Invention

According to an embodiment of the present invention, a water feed hose comprises a power generation unit which generates electric power in a state attached to a connector, and further comprises a secondary battery which stores the generated electric power. An electronic unit is supplied with, at a preset current and voltage, the electric power stored in the secondary battery or the electric power generated by the power generation unit, and operates.

As the electric power generated by the power generation unit attached to the connector is supplied to the electronic unit similarly provided near the connector, it is unnecessary to provide a cable for power supply in a hose or incorporate such a cable into a hose. Thus, handling becomes easy. By additionally mounting various functions corresponding to purposes as the electronic unit, the water feed hose can be made multifunctional.

### Brief Description of Drawings

FIG. 1 is a perspective view showing a cross-sectional surface of a part of an end part of a water feed hose according to the first embodiment of the present invention.
FIG. 2 is a block diagram showing electronic components incorporated into the connector of FIG. 1.
FIG. 3 is a side view showing a cross-sectional surface of a part of the female connector of the water feed hose of FIG. 1.
FIG. 4 is a cross-sectional view of the female connector along the F4-F4 line of FIG. 3.
FIG. 5 is a cross-sectional view of the female connector along the F5-F5 line of FIG. 3.
FIG. 6 is a cross-sectional view of the female connector along the F6-F6 line of FIG. 3.
FIG. 7 is a side view showing a cross-sectional surface of a part of the male connector of the water feed hose of FIG. 1.
FIG. 8 is a cross-sectional view of the male connector along the F8-F8 line of FIG. 7.
FIG. 9 is a cross-sectional surface of the male connector along the F9-F9 line of FIG. 7.
FIG. 10 is a cross-sectional view showing a state in which the connector of the water feed hose shown in FIG. 1 is connected to the connector of another water feed hose.
FIG. 11 is a perspective view showing a cross-sectional surface of the female connector of a water feed hose according to the second embodiment of the present invention.
FIG. 12 is a block diagram showing electronic components incorporated into the connector of FIG. 11.
FIG. 13 is a front view of the vibration power generation unit shown in FIG. 11.
FIG. 14 is a perspective view showing a cross-sectional surface of the male connector of the water feed hose of FIG. 11.
FIG. 15 is a plan view showing a cross-sectional surface of a part of a water feed hose according to the third embodiment of the present invention.
FIG. 16 is a block diagram showing electronic components incorporated into the connector of FIG. 15.
FIG. 17 is a plan view showing a cross-sectional surface of a part of an intermediary unit according to the fourth embodiment, which is not part of the present invention.
FIG. 18 is a block diagram showing electronic components incorporated into the intermediary unit of FIG. 17.
FIG. 19 is a cross-sectional view of the intermediary unit along the F19-F19 line of FIG. 17.
FIG. 20 is a cross-sectional view showing the intermediary unit along the F20-F20 line of FIG. 17.
FIG. 21 is a side view showing a cross-sectional surface of a part of an intermediary unit according to the fifth embodiment, which is not part of the present invention.
FIG. 22 is a block diagram showing electronic components incorporated into the intermediary unit of FIG. 21.
FIG. 23 is a side view showing a cross-sectional surface of a part of an intermediary unit according to the sixth embodiment, which is not part of the present invention.
FIG. 24 is a block diagram showing electronic components incorporated into the intermediary unit of FIG. 23.
FIG. 25 is a side view showing a cross-sectional surface of a part of an intermediary unit according to the seventh embodiment, which is not part of the present invention.
FIG. 26 is a cross-sectional view of the intermediary unit along the F26-F26 line of FIG. 25.
FIG. 27 is a general perspective view of a water feed hose according to the eighth embodiment of the present invention.
FIG. 28 is a block diagram showing electronic components provided in the water feed hose of FIG. 27.
FIG. 29 is a general plan view of the water feed hose of FIG. 27.
FIG. 30 shows a structural example of a light power generation element provided in the water feed hose of FIG. 29.
FIG. 31 is a general plan view of a water feed hose according to the ninth embodiment of the present invention.
FIG. 32 is a block diagram showing electronic components provided in the water feed hose of FIG. 31.
FIG. 33 shows a structural example of an elastic power generation element provided in the water feed hose of FIG. 31.
FIG. 34 is a cross-sectional view of the water feed hose along the F34-F34 line of FIG. 31.
FIG. 35 is a general plan view of a water feed hose according to the tenth embodiment of the present invention.
FIG. 36 is a block diagram showing electronic components provided in the water feed hose of FIG. 35.
FIG. 37 shows a structural example of a thermoelectric element provided in the water feed hose of FIG. 35.
FIG. 38 is a bird's-eye view showing a water feed system using water feed hoses and intermediary units according to the eleventh embodiment of the present invention.
FIG. 39 is a block diagram showing the water feed system of FIG. 38.
FIG. 40 shows a display example of the water feed line recognized by the water feed system of FIG. 38.
FIG. 41 shows a display example of the data obtained by the water feed system of FIG. 38 regarding the water feed hoses and the intermediary units.

### Mode for Carrying Out the Invention

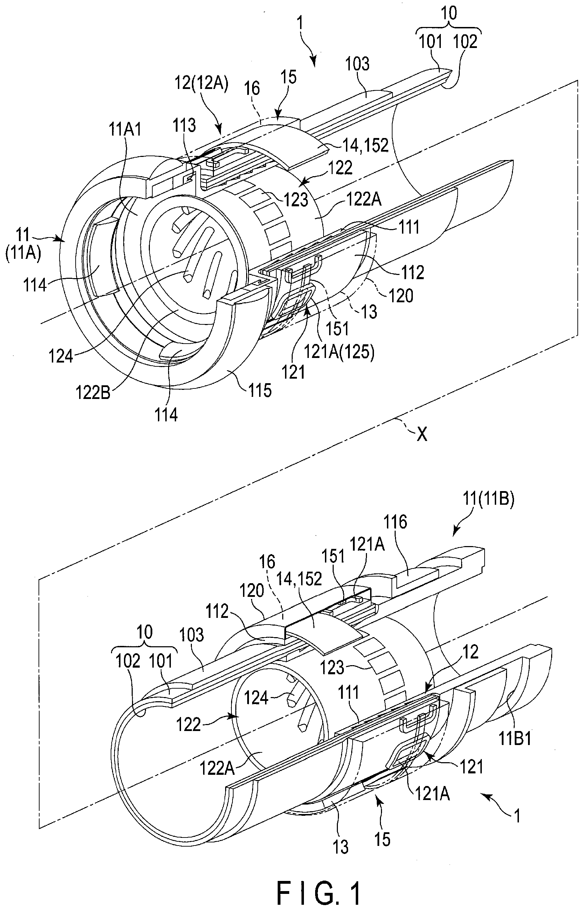

This specification explains an example in which the water feed hose 1 of the first embodiment of the present invention is applied to a fire hose with reference to FIG. 1 to FIG. 10. The water feed hose 1 shown in FIG. 1 comprises a connector 11 including a female connector 11A and a male connector 11B as an insertion type in an end part of a hose 10. Electronic components including a power generation unit 12, etc., are provided in each of the female connector 11A and the male connector 11B. The water feed hose 1 is allowed to comprise various additional functions operated by electricity by using the electric power generated by the power generation unit 12.

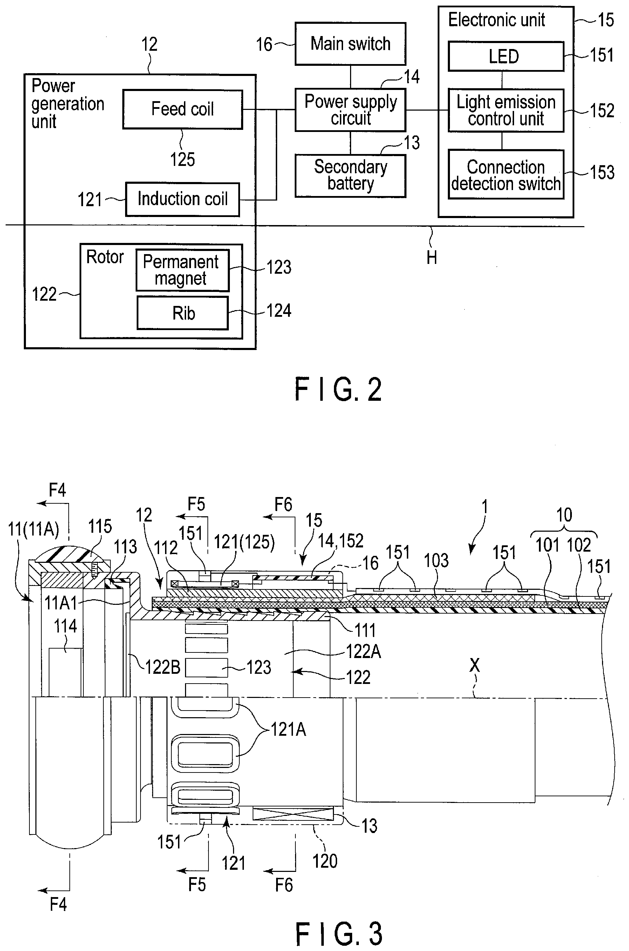

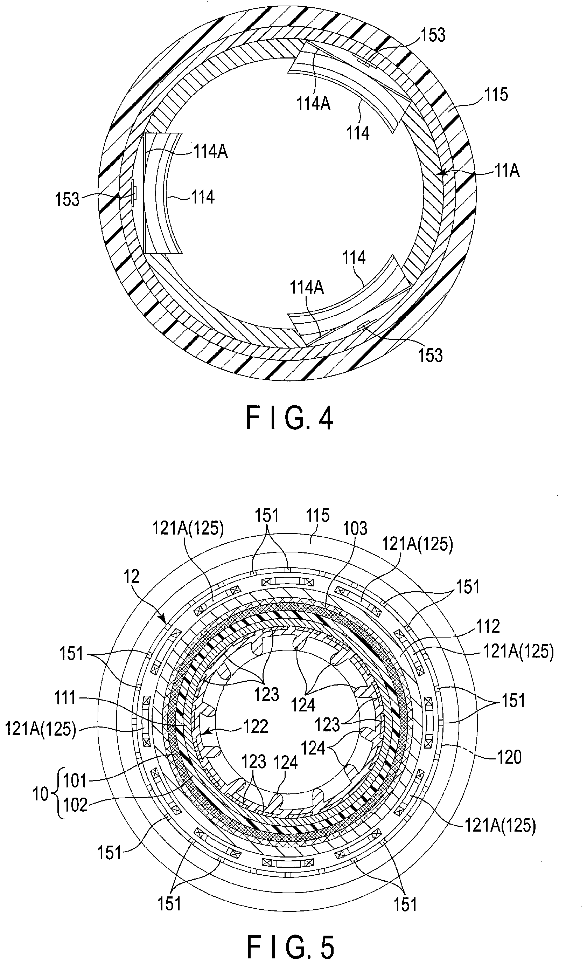

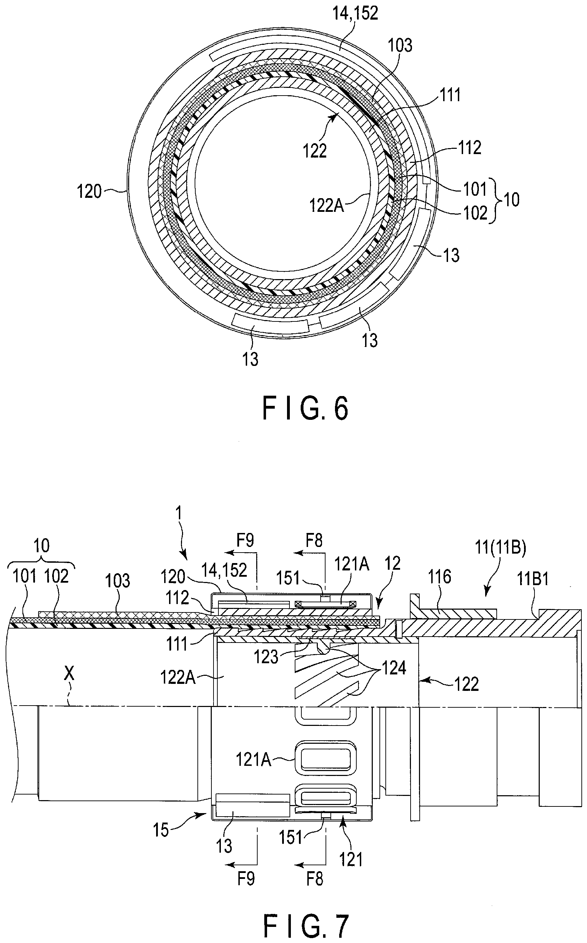

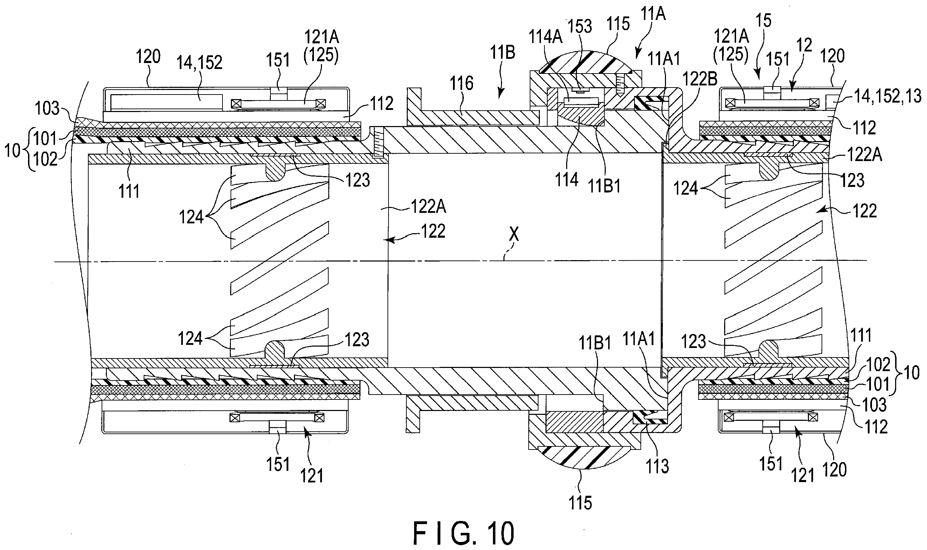

FIG. 1 shows a cross-sectional surface of a part of each of the female connector 11A and the male connector 11B to clarify the internal structure. FIG. 2 shows the configuration of electronic components. In FIG. 2, the components provided in the flow channel of the water feed hose 1 are separated from the components provided outside the water feed hose 1 by line H. FIG. 3 to FIG. 6 show the female connector 11A. FIG. 7 to FIG. 9 show the male connector 11B. FIG. 3 and FIG. 7 are side views showing cross-sectional surfaces of the upper half from the central axis. FIG. 4, FIG. 5, FIG. 6, FIG. 8 and FIG. 9 show cross-sectional views perpendicular to the central axis along the cross-sectional instruction lines of FIG. 3 and FIG. 7. FIG. 10 is a cross-sectional view showing a state in which the male connector 11B of another water feed hose 1 comprising the same function is inserted into and connected to the female connector 11A of the water feed hose 1.

The water feed hose 1 shown in FIG. 1 comprises the hose 10, the connector 11 (the female connector 11A and the male connector 11B), the power generation unit 12, a secondary battery 13, a power supply circuit 14, an electronic unit 15 and a main switch 16. The hose 10 comprises, for example, a cloth jacket 101 twilled with the warp and woof as the exterior, and a resinous liner 102 adhering tightly to the jacket 101 and having water resistance as the interior. The hose 10 is an insulating member.

The connector 11 is an insertion type of connector, and includes the female and male connectors 11A and 11B connectable to each other. Each of the female connector 11A and the male connector 11B comprises an attachment portion 111 which is inserted into an end part of the hose 10 by a certain length. The connector 11 (the female connector 11A and the male connector 11B) is fixed to an end part of the hose 10 by covering the outer circumference of the end part of the hose 10 with a cloth protection sleeve 103 which is slightly longer than the attachment portion 111 and further crimping a swaging ring 112 attached to the outer circumference in a state where the attachment portion 111 is inserted into the end part of the hose 10.

The female connector 11A comprises a gasket 113 used for sealing in a state where the male connector 11B is inserted, engaging latches 114 used to prevent removal of the distal end part of the inserted male connector 11B, and a tire 115 which has rubber elasticity and protects the female connector 11A. As shown in FIG. 4, the latches 114 are provided at three positions such that they are equally distributed, and are urged to protrude toward the center by plate springs 114A. In a state where the front end surface of the male connector 11B is in contact with a contact surface 11A1 perpendicular to the central axis X of the female connector 11A, each latch 114 engages with a step portion 11B1 of the distal end part of the male connector 11B. The tire 115 is attached to the outer circumference in the range in which the latches 114 are provided.

The male connector 11B comprises a releasing ring 116 to remove the latches 114 of the female connector 11A engaging with the step portion 11B1 provided in the outer circumference of the distal end part. The releasing ring 116 is freely slidable in a circumferential direction and an axial direction. When the releasing ring 116 is slid to the female connector 11A side in a state where the latches 114 engage with the distal end part of the male connector 11B is inserted into the female connector 11A as shown in FIG. 10, the releasing ring 116 is inserted between the latches 114 and the distal end part, and the latches 114 are pushed out to the outside of the step portion 11B1. Since the latches 114 are released, the male connector 11B can be removed from the female connector 11A.

As shown in FIG. 1, FIG. 3 and FIG. 7, the power generation unit 12 is attached to each of the female and male connectors 11A and 11B of the connector 11, and is configured to generate electric power. The power generation unit 12 of the first embodiment is a hydroelectric power generation unit 12A allowed to generate electric power when water flows through the hose 10.

As shown in FIG. 2, the hydroelectric power generation unit 12A includes an induction coil 121, a rotor 122, permanent magnets 123 and ribs 124. The components provided in the flow channel of the water feed hose 1 are separated from the components provided outside the water feed hose by line H. The induction coil 121 comprises a plurality of coil portions 121A provided in the outer circumference of the connector 11 in the circumferential direction. Each coil portion 121A is wound based on a radial line perpendicular to the central axis X. The induction coil 121 of the female connector 11A is shown in FIG. 1, FIG. 3 and FIG. 5. The induction coil 121 of the male connector 11B is shown in FIG. 1, FIG. 7 and FIG. 8.

The rotor 122 is rotatably provided along the inner circumferential surface of the connector 11. As shown in FIG. 1 and FIG. 3, the rotor 122 of the female connector 11A comprises a cylindrical portion 122A along the inner circumferential surface of the attachment portion 111 of the connector 11. As shown in FIG. 1 and FIG. 7, the rotor 122 of the male connector 11B comprises a cylindrical portion 122A along the inner circumferential surface of the attachment portion 111 in a manner similar to that of the female connector 11A. The rotor 122 is formed of a nonmagnetic member such as an aluminum alloy or synthetic resin.

In case of either the female connector 11A or the male connector 11B, a measure is taken to prevent the rotor 122 from being washed away by the flow of water in a direction along the central axis X. The water feed hose 1 comprising the insertion type of connector 11 is used such that water flows in from the female connector 11A side and flows out from the male connector side.

In the present embodiment, the rotor 122 of the female connector 11A comprises a flange portion 122B extending along the contact surface 11A1 which comes in contact with the front end surface of the male connector 11B when the male connector 11B is connected to the female connector 11A. Thus, a processing operation applied to the female connector 11A to attach the rotor 122 is unnecessary in the present embodiment. A spot facing portion may be provided such that the flange portion 122B is located behind the contact surface 11A1.

In case of the rotor 122 of the male connector 11B, a setscrew screwed in a radial direction from the outer circumferential surface of the connector 11 is inserted into a groove provided on the outer circumferential surface of the cylindrical portion 122A. To reduce the load applied to the setscrew, the cylindrical portion 122A of the rotor 122 of the male connector 11B may be extended to a position at which the cylindrical portion 122A comes in contact with the flange portion 122B of the rotor 122 of the female connector 11A. In either case, a processing operation should be preferably applied to the extent that an effect caused to the shape and strength of the male connector 11B is less.

The structure to prevent the rotor 122 from being washed away by the flow of water in a direction along the central axis X is not limited to the above example. In the present embodiment, a member to prevent the rotor 122 from being washed away for the connector 11A (11B) is not provided inside the cylindrical portion 122A.

In case of either the rotor 122 attached to the female connector 11A or the rotor 122 attached to the male connector 11B, to prevent the rotor 122 from being washed away, a retention ring manufactured based on the fit tolerance of interference fit may be pressed into the upstream side and the downstream side of the cylindrical portion 122A. On the condition that the cross-sectional area of the flow channel of each of the female and male connectors 11A and 11B is not extremely less, it is also preferable that a bearing should be provided between the attachment portion 111 and the rotor 122 to reduce the rotational resistance of the rotor 122.

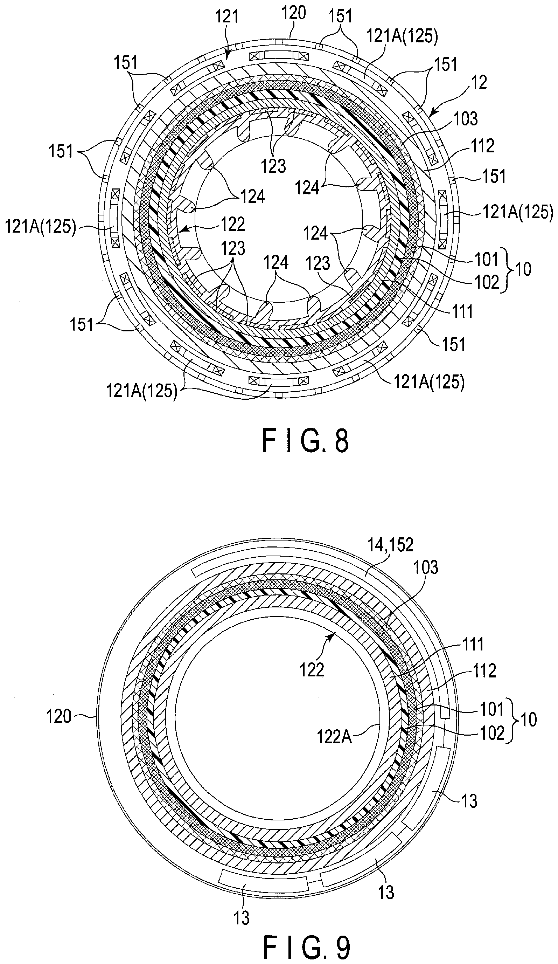

A plurality of permanent magnets 123 are provided in the circumferential direction of the rotor 122, and generate respective magnetic fields in a radial direction with respect to the central axis X. The permanent magnets 123 are provided such that the generated magnetic fields pass through the coil portions 121A of the induction coil 121. The permanent magnets 123 of the female connector 11A are provided in the rotor 122 as shown in FIG. 1 and FIG. 5. The permanent magnets 123 of the male connector 11B are provided in the rotor 122 as shown in FIG. 1 and FIG. 8.

A plurality of ribs 124 are provided along the inner circumferential surface of the rotor 122 and have an angle in a circumferential direction from a position parallel to the central axis X. In the present embodiment, as shown in FIG. 1, FIG. 5 and FIG. 8, the ribs 124 protrude from the inner circumferential surface of the rotor 122, and form a gentle helix based on the central axis from the upstream side to the downstream side. The ribs 124 may be partially formed in the longitudinal direction of the cylindrical portion 122A of the rotor 122 as shown in FIG. 3 and FIG. 7, or may be provided over the entire length of the cylindrical portion 122A.

When water flows through the hose 10, water is in contact with the ribs 124. The rotor 122 is rotated by this reaction force. In the present embodiment, water flows in from the female connector 11A side and flows out through the hose 10 to the male connector 11B. The ribs 124 are formed in a helical shape twisted clockwise (in a right-handed direction) when they are seen from the upstream side. Thus, the rotor 122 is rotated counterclockwise (in a left-handed direction) by the force received from water when it is seen from the upstream side.

The shape of the ribs 124 is not limited to the thick structure shown in FIG. 1, FIG. 3, FIG. 5, FIG. 7 and FIG. 8. The shape of the ribs 124 may be like thin fins in a circumferential direction, or may be, in place of the shape twisted in a helical form, a flat shape inclined at a certain angle with respect to the central axis X in the center of the ribs 124.

In the power generation unit 12 comprising the above structure, when the rotor 122 is rotated by supplying water to the hose 10, the permanent magnets 123 mounted on the rotor 122 continuously change the magnetic field with respect to the induction coil 121. Thus, AC power can be generated. The induction coil 121 is provided in the outer circumference of the connector 11. In water, only the permanent magnets 123 mounted on the rotor 122 are provided. Thus, the dangers of an electrical leak are less.

The secondary battery 13, the power supply circuit 14, the electronic unit 15 and the main switch 16 are provided outside the water feed hose 1 as shown in FIG. 2. In the present embodiment, as shown in FIG. 1, FIG. 3 and FIG. 7, these components are provided together with the induction coil 121 of the power generation unit 12 in the outer circumference of the swaging ring 112 swaging the end part of the hose 10 in the outer circumference of the attachment portion 111 of the connector 11.

The electric power generated by the power generation unit 12 is supplied to the secondary battery 13 and the electronic unit 15 via the power supply circuit 14 as shown in FIG. 2. The secondary battery 13 stores the electric power generated by the power generation unit 12 and discharges to supply electric power to the electronic unit 15. At this time, the power supply circuit 14 converts the electric power stored in the secondary battery 13 or the electric power generated by the power generation unit 12 into the current and voltage set in the electronic unit 15 and supplies the electric power to the electronic unit 15.

The electronic unit 15 is attached to the vicinity of the connector 11 and is operated by the electric power supplied via the power supply circuit 14. The main switch 16 is connected to the power supply circuit 14, and switches the power supply circuit 14 to a state in which electric power is supplied to at least the electronic unit 15 when it is operated from the outside.

The main switch 16 switches the power supply circuit 14 to a state in which electric power is supplied to the electronic unit 15 by a first operation, and switches the power supply circuit 14 to a state in which electric power is not supplied to the electronic unit 15 by a second operation. The first operation and the second operation may be operations with respect to an alternate type of switch which mechanically switches the circuit between a connected state and an unconnected state, or may be a touch sensor which outputs a signal to the power supply circuit 14. The main switch 16 may be operated to start charging the secondary battery 13 with the electric power generated by the power generation unit 12.

In the first embodiment, the electronic unit 15 includes light-emitting diodes (LEDs) 151 which are light sources, a light emission control unit 152 and connection detection switches 153. The light sources may be an organic EL or a backlight for a display panel other than the LEDs 151. As shown in FIG. 3, FIG. 5, FIG. 7 and FIG. 8, a plurality of LEDs 151 are arranged in the circumferential direction on the outer circumferential surface of a cover 120 which covers the induction coil 121, the secondary battery 13 and the power supply circuit 14. The light emission color of the LEDs 151 may be a single color such as red, blue or green, or may be full-color light emission in which some or all of them are mounted on a single unit.

The LEDs 151 may be arranged in the range of the swaging ring 112 of the connector 11 in a direction along the central axis X of the hose 10, or in the range in which the protection sleeve 103 is provided beyond the range of the swaging ring 112, or in a longer manner beyond the protection sleeve 103.

The light emission control unit 152 controls the pattern for causing the LEDs 151 which are the light sources to emit light. The pattern for causing the LEDs 151 to emit light includes at least one of switching on and off the light at predetermined time intervals, the rhythm of blinking time intervals, the portions to be lighted up in a plurality of light sources and the light emission color of each light source. To control the pattern indicates that these elements are changed based on predetermined conditions.

The conditions which can be determined by the above structure as the predetermined conditions include, for example, a case where the power generation unit 12 generates electric power (in other words, a case where water flows through the hose 10), a case where the power generation unit 12 does not generate electric power (a case where water does not flow through the hose 10), a case where the amount of charge of the secondary battery 13 is full, a case where the amount of charge of the secondary battery 13 is less than a preset value, and a case where a certain time has passed since the start of the use. Further, if sensors for obtaining information related to the surrounding environment and the water feed hose 1 are mounted, a wide variety of conditions may be set.

Since the present embodiment comprises the connection detection switches 153, this specification explains that the light emission pattern of the LEDs 151 is changed based on a connection signal output from the connection detection switches 153 below.

The connection detection switches 153 are provided at a position for detecting the displacement of the latches 114, in other words, in the outer circumference of the latches 114 as shown in FIG. 4. In the present embodiment, three latches 114 are provided. The connection detection switches 153 corresponding to the respective latches 114 are provided. When the displacement of the latches 114 in a radially-outward direction away from the central axis X occurs by inserting the male connector 11B of another water feed hose 1 into the female connector 11A, the connection detection switches 153 are pressed by the latches 114. As a result, the connection detection switches 153 output a connection signal. When the light emission control unit 152 detects the connection signal, the light emission control unit 152 changes the pattern for causing the LEDs 151 to emit light.

The electronic unit 15 comprises the LEDs 151, the light emission control unit 152 and the connection detection switches 153. When the other-side connector matched with the connector 11 is connected, the connection detection switches 153 output a detection signal, and the light emission control unit 152 changes the light emission pattern of the LEDs 151. A worker who connected the water feed hose 1 (a firefighter in the present embodiment in which the water feed hose is a fire hose) can easily confirm that the male connector 11B is assuredly connected to the female connector 11A.

In the first present embodiment, the connection detection switches 153 are provided in the female connector 11A. Thus, as an example for changing the light emission pattern of the LEDs 151 of the female connector 11A, the LEDs 151 are configured to emit red light before the male connector 11B is connected to the female connector 11A, and the light emission pattern is changed so as to change the light emission color to green after the connection is completed. Alternatively, the LEDs 151 are configured to flash before the male connector 11B is connected to the female connector 11A, and the light emission pattern is changed to a state in which the LEDs 151 emit light all times after the connection is completed.

To distinguish the female connector 11A from the male connector 11B, the light emission color of the LEDs 151 of the female connector 11A is set so as to be different from that of the LEDs 151 of the male connector 11B. When they are connected to each other, the light emission color of the female connector 11A is changed to the same color as the light emission color of the male connector 11B. Alternatively, the LEDs 151 of the female connector 11A are configured to emit light at blinking time intervals different from the LEDs 151 of the male connector 11B. When they are connected to each other, they are caused to emit light at the same blinking time intervals.

The electronic unit 15 is similarly attached to the male connector 11B. Thus, when the connection detection switches 153 are included in the electronic unit 15 of the male connector 11B, to confirm the connection, a wider variety of displays can be performed. For example, the connection detection switches 153 of the male connector 11B are provided in the outer circumference of the distal end part located between the gasket 113 and the latches 114 in a state where the male connector 11B is inserted into the female connector 11A. At this time, the connection detection switch 153 may be a proximity sensor.

By similarly providing the connection detection switches 153 in the male connector 11B, it is possible to change the light emission pattern including the light emission color and the lighting of the LEDs 151 to confirm whether or not the connection is correctly performed in each of the female and male connectors 11A and 11B. In addition to the above changes in the light emission pattern, for example, before connection, the LEDs 151 of the female connector 11A are caused to emit red light, and the LEDs 151 of the male connector 11B are caused to emit blue light. After a connection signal is detected from all the connection detection switches 153 and the connection is completed, both the LEDs 151 of the female connector 11A and the LEDs 151 of the male connector 11B are changed so as to emit green or white light. In this way, the connection can be more precisely determined.

The female connector 11A of the present embodiment comprises the connection detection switches 153 at positions corresponding to the latches 114. Thus, the LEDs 151 corresponding to the range in which the latches 114 are provided may be controlled by the light emission control unit 152 such that the light emission pattern is changed so as to correspond to the connection signals of the connection detection switches 153 corresponding to the latches 114, respectively. In other words, when the male connector 11B is insufficiently inserted into the female connector 11A, and thus, one of the latches 114 does not engage with the step portion 11B1, in other words, one of the connection detection switches 153 is still pressed, the light emission pattern (including at least one of the light emission color and the blinking time intervals) of the LEDs 151 in the range in which the latch 114 corresponding to the connection detection switch 153 is provided is made different from that of the other portion. In this way, a worker can easily confirm that the male connector 11B is not correctly connected to the female connector 11A although the male connector 11B is inserted into the female connector 11A, that is, a deviated state. Thus, the worker can connect them to each other again.

A communication circuit for short-range wireless communication may be mounted on the electronic unit 15, and communication (pairing) may be performed between the female and male connectors 11A and 11B connected to each other. When the connection is confirmed, the light emission pattern may be changed. Specifically, for example, the light emission color, the blinking time intervals or the light emission positions of the LEDs 151 of the female and male connectors 11A and 11B may be changed. When communication can be performed, the connection detection switches 153 may be provided in only one of the female connector 11A and the male connector 11B. In addition, since communication is performed, when especially the blinking time intervals are changed in the light emission pattern, synchronism can be easily obtained.

The power generation unit 12 includes a feed coil 125 as shown in FIG. 2. As the induction coil 121 is provided in the outer circumference of the connector 11 (the female connector 11A and the male connector 11B) in the present embodiment, the feed coil 125 is allowed to use one or some of the coil portions 121A of the induction coil 121. When the feed coil 125 is provided for exclusive use, the feed coil 125 is provided at a position close to the outer circumferential surface of the connector 11. By providing the connector 11 in the AC magnetic field generated by an external device such that the AC magnetic field crosses the winding surface of the feed coil 125, electric power is generated in the feed coil 125 by the effect of electromagnetic induction. Thus, electric power can be efficiently supplied from the external device.

In the present embodiment, the coil portions 121A of the induction coil 121 are provided in a circumferential direction with respect to the central axis X of each of the female and male connectors 11A and 11B. Thus, when an external device which generates an AC magnetic field has a flat-board shape, and an AC magnetic field can be received by placement thereon, and the female and male connectors 11A and 11B are provided on the external device such that the central axis of each of the female and male connectors 11A and 11B crosses the AC magnetic field, electric power is generated in one of the coil portions 121A with any orientation.

When charge can be efficiently performed by preparing an external device attached to the outer circumference of each of the female and male connectors 11A and 11B and used exclusively for power supply, and a secondary battery having a capacity to supply sufficient power during use is mounted, the hydroelectric power generation unit 12A may not be provided.

Hereinafter, this specification explains the second to eleventh embodiments. In each embodiment, the structures comprising the same functions as those of the units of the water feed hose 1 of the first embodiment are denoted by the same reference numbers as the structures of the water feed hose 1 of the first embodiment. The detailed explanation refers to corresponding descriptions and drawings. The structures which are newly explained in the second embodiment and the subsequent embodiments are similarly denoted by the same reference numbers if they comprise the same structures in the subsequent embodiments. The explanation thereof refers to the descriptions in the preceding embodiments.

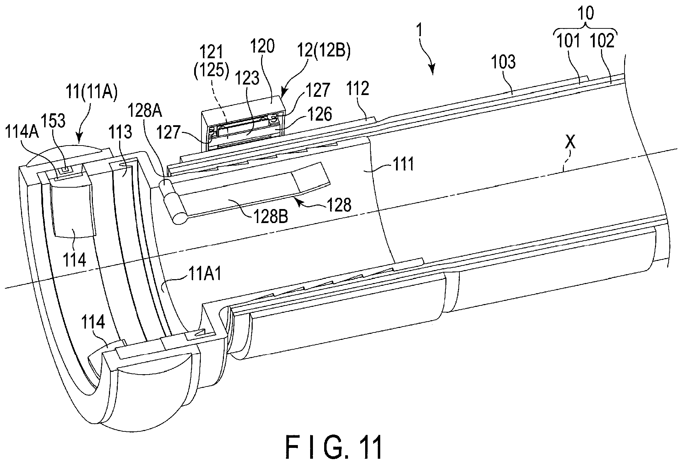

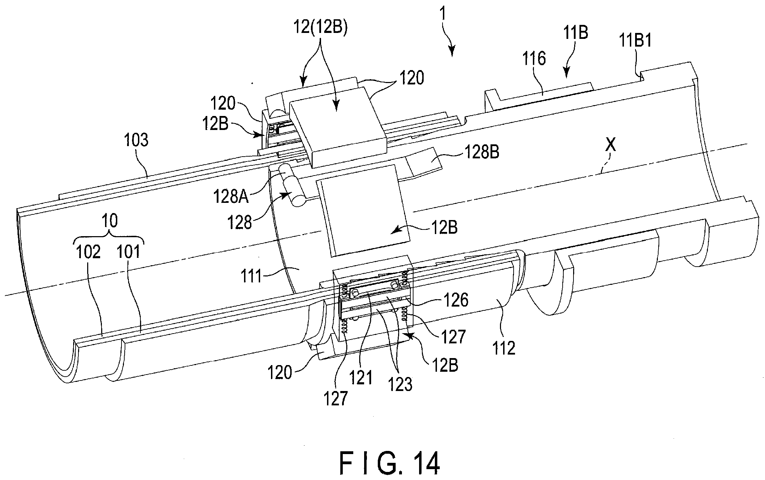

Now, this specification explains a water feed hose 1 according to the second embodiment of the present invention with reference to FIG. 11 to FIG. 14. The water feed hose 1 of the second embodiment is a fire hose comprising an inserting type of connector 11 in an end part of a hose 10. FIG. 11 shows a female connector 11A. FIG. 14 shows a male connector 11B. Each of FIG. 11 and FIG. 14 shows a cross-sectional surface passing through the central axis X.

The water feed hose 1 of the present embodiment employs vibration power generation units 12B as a power generation unit 12. The vibration power generation units 12B are provided in a circumferential direction in each of the outer circumference of the swaging ring 112 of the female connector 11A shown in FIG. 11 and the outer circumference of the swaging ring 112 of the male connector 11B shown in FIG. 14. FIG. 11 shows only one vibration power generation unit 12B. However, a plurality of vibration power generation units 12B are provided in a circumferential direction in a manner similar to that of FIG. 14.

As shown in FIG. 11 to FIG. 14, each vibration power generation unit 12B comprises an induction coil 121 fixed to the connector 11 (the female connector 11A and the male connector 11B), a movable element 126 which is movable in a direction crossing the winding central line of the induction coil 121, permanent magnets 123 mounted on the movable element 126 such that the magnetic line of force is along the winding central line of the induction coil 121, and elastic members 127 connecting the movable element 126 to the connector 11 so as to vibrate in a direction in which the magnetic field with respect to the induction coil 121 changes.

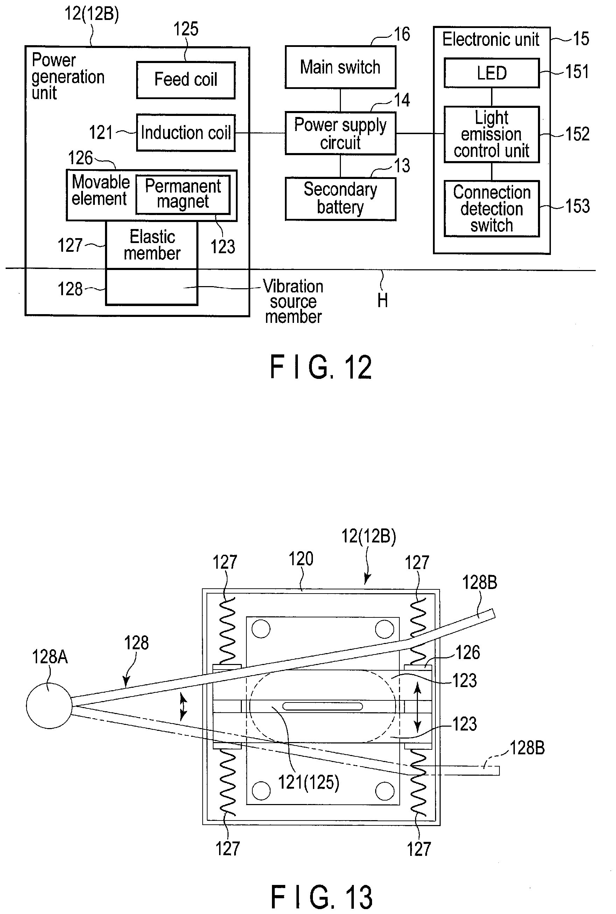

As shown in FIG. 11, FIG. 13 and FIG. 14, the induction coil 121, the movable element 126, the permanent magnets 123 and the elastic members 127 are accommodated in a cover 120 and are unitized. The induction coil 121 is wound into an oval which is long in a direction along the central axis X of the hose 10 as shown in FIG. 13. The induction coil 121 is fixed to the connector 11 via the cover 120.

The movable element 126 is provided so as to surround the outer circumference of the induction coil 121, and comprises the permanent magnets 123 in the inner diameter side and the outer diameter side in a radial direction with respect to the central axis X. Two permanent magnets 123 are provided in each side. Thus, four permanent magnets 123 are provided in total. In a range in which the movable element 126 moves, the permanent magnets 123 cross the winding central line of the induction coil 121. As shown in FIG. 13, the elastic members 127 retain the movable element 126 at a neutral position in a state where no external force is applied. When an external force is applied in a vertical direction in FIG. 13, the elastic members 127 vibrate the movable element 126.

When the movable element 126 is swayed by the vibration applied to the connector 11, the permanent magnets 123 are moved so as to cross the winding central line of the induction coil 121. In this way, the vibration power generation unit 12B comprising the above structure generates electric power. As shown in FIG. 12, the generated electric power is stored in a secondary battery 13 via a power supply circuit 14 and is supplied to an electronic unit 15.

LEDs 151 which are the light sources of the electronic unit 15, a light emission control unit 152 and connection detection switches 153 are provided in a manner similar to that of FIG. 1, FIG. 3 and FIG. 7 of the first embodiment although they are not shown in FIG. 11 or FIG. 14. The functions of these components are the same as those explained in detail in the first embodiment.

Further, in the water feed hose 1 of the second embodiment, as shown in FIG. 11 to FIG. 14, each vibration power generation unit 12B includes a vibration source member 128 which generates vibration when water flows through the hose 10. As shown in FIG. 11 and FIG. 14, the vibration source member 128 comprises a stem 128A protruding from the inner surface of the connector 11, and a fin 128B extending from the stem 128A to the downstream side of the flow of water. In FIG. 12, the component provided in the hose 10 is separated from the components provided outside the hose by line H.

The distal end of the downstream side of the fin 128B is slightly bent so as to easily sway based on the stem 128A when water flows through the hose 10. The fin 128B may be gently curved or wavy as a whole as long as it resonates and sways by the flow of water. To cause the fin 128B to easily sway, for example, the stem 128A should be preferably a coil spring having torsion elasticity.

The water feed hose 1 comprising the above structure is allowed to generate electric power, using the vibration power generation units 12B by vibration during transport even without power supply from the outside. The water feed hose 1 is allowed to charge the secondary battery 13 with the generated electricity and operate the electronic unit 15. When the vibration source member 128 is included in each vibration power generation unit 12B, even if the water feed hose 1 is used for a long time, sufficient vibration can be continuously applied to the vibration power generation units 12B by causing water to pass through the hose 10. In this way, electric power can be generated.

A single vibration power generation unit 12B may be provided in the outer circumference like the female connector 11A shown in FIG. 11. A plurality of vibration power generation units 12B may be provided in a circumferential direction like the male connector 11B shown in FIG. 14. A plurality of vibration power generation units 12B may be provided in a longitudinal direction. The direction in which each vibration power generation unit 12B is provided is not limited to a direction in which the displacement of the movable element 126 is caused by vibration in a circumferential direction based on the central axis X of the connector 11. The installation direction of the induction coil 121 or the moving direction of the movable element 126 may be a direction other than a circumferential direction such that electric power can be generated by, for example, vibration during transport. The chance of generating electric power is increased by combining the vibration power generation units 12B comprising the movable elements 126 having different moving directions.

As shown in FIG. 12, the vibration power generation unit 12B which is the power generation unit 12 of the water feed hose 1 of the second embodiment includes a feed coil 125. In the present embodiment, in a manner similar to that of the hydroelectric power generation unit 12A which is the power generation unit 12 of the water feed hose 1 of the first embodiment, the induction coil 121 is provided on the outer circumferential surface of the connector 11 (the female connector 11A and the male connector 11B). Thus, the induction coil 121 can be also used as the feed coil 125.

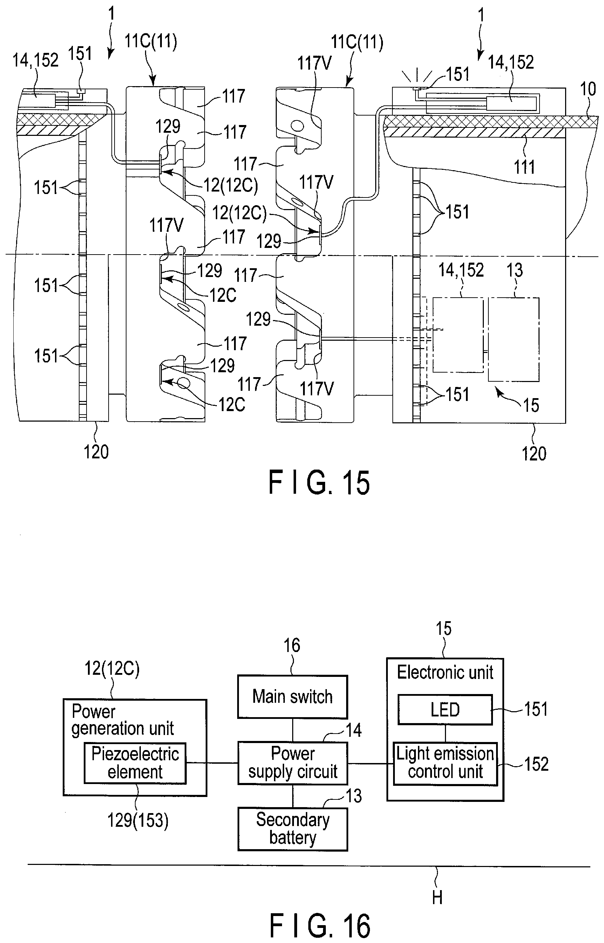

Now, this specification explains a water feed hose 1 according to the third embodiment of the present invention with reference to FIG. 15 to FIG. 16. The water feed hose 1 shown in FIG. 15 employs a coupler without the difference between a male type and a female type in a connector 11, that is, without a male or female type. The connector 11 is formed into the same shape having the revolution symmetry of n times with respect to the central axis X (hereinafter, referred to as a same-shape connector 11C).

FIG. 15 shows a state in which the same-shape connector 11C of the water feed hose 1 faces the same-shape connector 11C of another water feed hose 1 fitted into the same-shape connector 11C such that they are separated from each other. In FIG. 15, the cross-sectional surface of a hose 10 has a single-layered structure. However, in a manner similar to that of the hoses 10 of the first and second embodiments, the cross-sectional surface of the hose 10 may have a double-layered structure in which a resinous liner 102 is attached to the interior of a cloth jacket 101.

An end part of the hose 10 is fitted onto the attachment portion 111 of the connector 11, and is fastened and fixed by a special fixing metal part attached to the outer circumference. When the bore of the hose 10 is less, the hose 10 may be fixed by a swaging ring 112 in a manner similar to that of the first and second embodiments. In FIG. 15, the fixing metal part is integrally formed with a cover 120 which accommodates electronic components, etc. The structure of the fixing metal part is assumed to be a type in which a C-shaped hoop manufactured by cutting a part of the circumferential direction is squeezed by a bolt and a nut, or a squeezing type with a two-partition or three-partition ring.

The power generation unit 12 of the third embodiment employs a pressure power generation unit 12C including a piezoelectric element 129. Each pressure power generation unit 12C generates electric power when a collision load is applied to the piezoelectric element 129 by an operation when the other-side same-shape connector 11C matched with the same-shape connector 11C is connected to the same-shape connector 11C. Thus, as shown in FIG. 15, each piezoelectric element 129 is provided at a position where the top portion of the hook 117 of the other-side same-shape connector 11C hits against a valley portion 117V between the hooks 117 of the same-shape connector 11C.

As long as electric energy can be sufficiently assured for the energy consumption of the electronic unit 15, a single piezoelectric element 129 may be provided in only one valley portion, or may be provided in each of some portions or in every valley portion 117V. Even if, in a structure in which the piezoelectric elements 129 are provided in some portions, a slight bias occurs when the same-shape connectors 11C are connected to each other, electric power can be generated by one of the piezoelectric elements 129. As electric power is generated by a collision load, the generated electric power is output from the piezoelectric elements 129 in a short time at high voltage. A power supply circuit 14 converts the electric power into electric power having current and voltage suitable for the electronic unit 15 and supplies the electric power. Surplus electric power is stored in a secondary battery 13.

In the present embodiment, the piezoelectric elements 129 are provided in the valley portions 117V of each of the same-shape connectors 11C connected to each other. Thus, a worker can confirm that the same-shape connectors 11C are correctly connected to each other when the output obtained from the piezoelectric elements 129 mounted on each same-shape connector 11C is detected by a light emission control unit 152 via the power supply circuit 14, in other words, the supply of electric power is detected, and LEDs 151 which are light sources are caused to emit light. Thus, the piezoelectric elements 129 function in the same manner as connection detection switches 153.

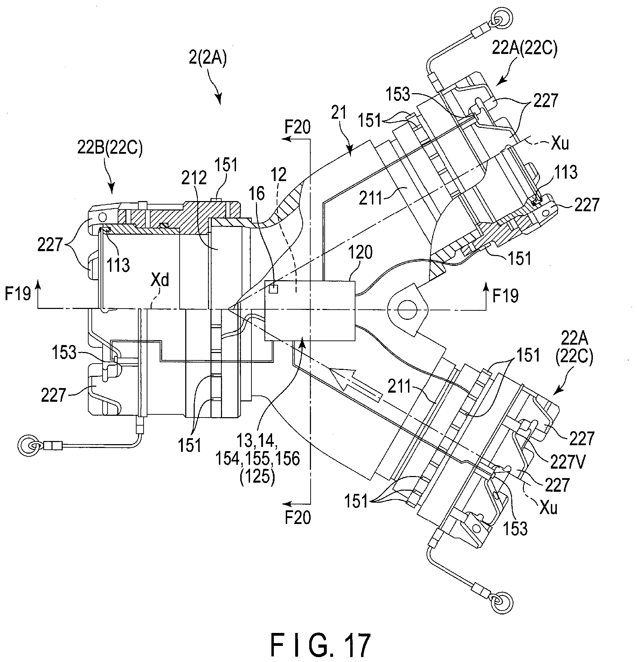

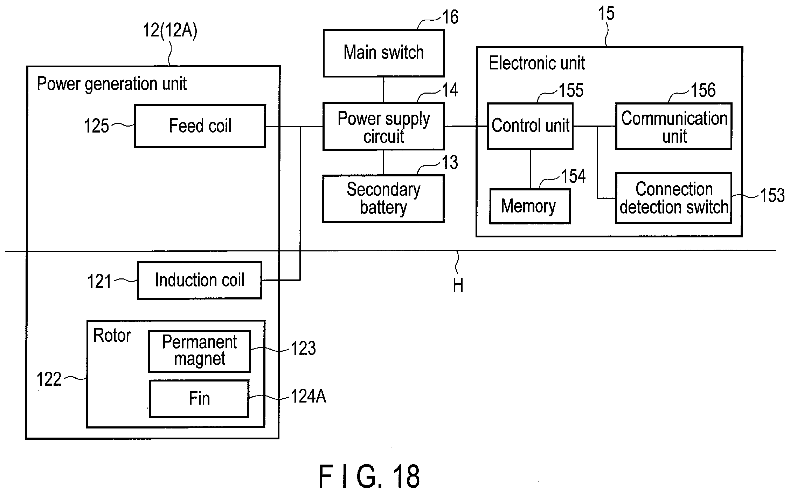

Now, this specification explains an intermediary unit 2 according to the fourth embodiment with reference to FIG. 17 to FIG. 20. The intermediary unit 2 is an intermediary unit attached between water feed hoses when the water feed hoses are connected to each other. In the present embodiment, as shown in FIG. 17, the intermediary unit 2 is a water collecting unit 2A which collects the water supplied from two water feed hoses into one water feed hose. As shown in FIG. 18, the intermediary unit 2 comprises a housing 21, a power generation unit 12, a secondary battery 13, a power supply circuit 14, an electronic unit 15 and a main switch 16.

As shown in FIG. 17, in the housing 21, a first intermediary connector 22A is attached to an inflow opening 211 on the upstream side in each of the two separate parts, and a second intermediary connector 22B is attached to an outflow opening 212 on the downstream side. As the intermediary unit 2 is the water collecting unit 2A, the bore of the second intermediary connector 22B is greater than that of each first intermediary connector 22A.

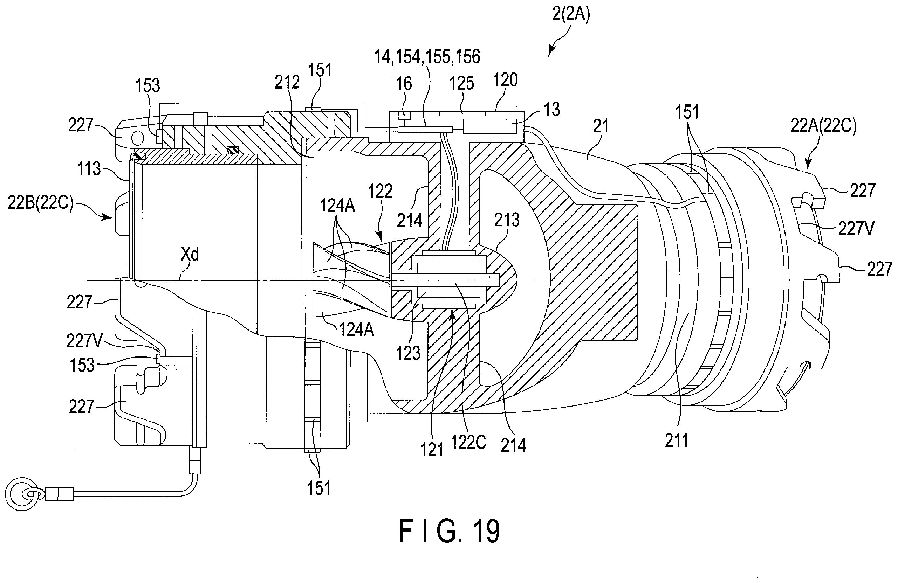

Each of the first intermediary connectors 22A and the second intermediary connector 22B shown in FIG. 17 and FIG. 19 are the same-shape connectors which are connectors without a male or female type. The water feed hoses 1 in which same-shape connectors 11C suitable for the respective sizes are attached to the end parts are connected to the first intermediary connectors 22A and the second intermediary connector 22B. When a water feed hose 1 comprising a female connector 11A on the upstream side and comprising a male connector 11B on the downstream side is connected as shown in the first and second embodiments, each first intermediary connector 22A is a connector having the same shape as the female connector 11A, and the second intermediary connector 22B is a connector having the same shape as the male connector 11B.

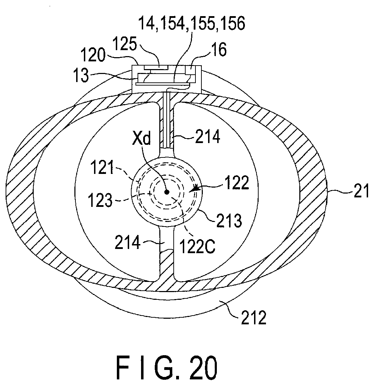

The power generation unit 12 is a hydroelectric power generation unit 12A which generates electric power in a state incorporated into the housing 21. As shown in FIG. 18, an induction coil 121, a rotor 122, a permanent magnet 123 and fins 124A are provided inside the housing 21. At this time, the induction coil 121 is structured by providing a plurality of coil portions 121A wound based on a radial line perpendicular to the central axis Xd of the second intermediary connector 22B of the outlet 212 around the central axis Xd. In the present embodiment, as shown in FIG. 19 and FIG. 20, the induction coil 121 is provided in a case 213 formed in a streamline shape having the round upstream side and becoming narrower to the downstream side to reduce the flow resistance of water. The case 213 is retained in the center of the housing 21 by a stem 214 extending from the housing 21.

The shaft 122C of the rotor 122 rotatably incorporated passes through the center of the induction coil 121. The permanent magnet 123 in which the N pole and the S pole are alternately provided is attached to the shaft 122C. The rotor 122 is exposed from the end of the case 213 on the downstream side and has an outline smoothly connected to the outside diameter of the case 213. The rotor 122 is formed into a cone shape tapering to the downstream side from the case 213, and is integrally formed with the fins 124A on the outer circumferential surface.

The fins 124A are twisted clockwise (in a right-handed direction) to the downstream side when they are seen from the upstream side. The outside diameter of the fins 124A is substantially equal to the case 213. The fins 124A are provided at a position where the central axis Xu of the intermediary connector 22A of each inlet 211 shown in FIG. 17 just intersects with the central axis Xd of the second intermediary connector 22B of the outlet 212. In this way, the water supplied from each inlet 211 hits against the fins 124A, thereby effectively rotating the rotor 122.

The secondary battery 13, the power supply circuit 14, the electronic unit 15 and the main switch 16 are provided outside the housing 21 as shown in FIG. 17 to FIG. 19. As shown in FIG. 17 and FIG. 19, the secondary battery 13, the power supply circuit 14 and the main switch 16 are accommodated in a cover 120 provided in substantially the center of the housing 21. The main switch 16 is exposed from the outer surface of the cover 120, and is provided such that it can be externally operated.

As shown in FIG. 18, the electronic unit 15 includes connection detection switches 153, a memory 154, a control unit 155 and a communication unit 156. As shown in FIG. 17, the connection detection switches 153 are provided in the intermediary connectors 22A of the two inlets 211 and the intermediary connector 22B of the outlet 212, respectively. In the present embodiment, the intermediary connectors 22A and 22B are connectors without a male or female type to which the same-shape connectors 11C are connected. Thus, each connection detection switch 153 is provided in a valley portion 227A between hooks 227 in a manner similar to that of the third embodiment. In the third embodiment, the piezoelectric element 129 of the power generation unit 12 is used as each connection detection switch 153. However, in the present embodiment, a thin contact switch may be employed.

The memory 154 is connected to the control unit 155, and stores the individual identification information of the intermediary connectors 22A and 22B which are connectors. The individual identification information may be, for example, a serial number determined after the manufacturing of the intermediary unit 2 before delivery, or may be an identification code which can be set by a user. In the present embodiment, the connection detection switches 153 are provided so as to individually correspond to the intermediary connectors 22A of two inlets 211 and the intermediary connector 22B of one outlet 212. The memory 154 stores individual identification information individually corresponding to the connection detection switches 153.

The control unit 155 reads individual identification information corresponding to a connection signal output from each connection detection switch 153 from the memory 154, associates the information with each other and outputs the information as connection information. The communication unit 156 is connected to the control unit 155, and wirelessly transmits the connection information output from the control unit 155. The radio wave transmitted from the communication unit 156 may have an output so as to reach a distance of several tens of centimeters when communication is performed with the water feed hoses 1 in which the same-shape connectors 11C connected to the intermediary connectors 22A and 22B are provided in the end parts. The radio wave transmitted from the communication unit 156 has an output so as to reach a distance of several tens of meters to several hundreds of meters when a plurality of intermediary units are used with the water feed hoses 1.

The radio wave including connection information may be unilaterally output from the communication unit 156 at certain time intervals. When the communication unit 156 is allowed to perform bidirectional communication, connection information may be transmitted in response to a request from the outside, in other words, upon receipt of a control signal requesting connection information.

Moreover, in the present embodiment, the electronic unit 15 comprises the communication unit 156. The electronic unit 15 may be configured to operate when an activation signal is received from the outside via the communication unit 156, and to be in a standby state where power consumption other than power consumption for the reception in the communication unit 156 is reduced when a standby signal is received from the outside via the communication unit 156.

The electronic unit 15 of the fourth embodiment further comprises LEDs 151 which are light sources in the outer circumferences of the inlets 211 and the outlet 212. A single light emission control unit 152 which controls the switching on and off of the LEDs 151 at three positions is provided in the electronic unit 15. The power supply circuit 14, the light emission control unit 152, the memory 154, the control unit 155 and the communication unit 156 are mounted on a substrate provided in the cover 120.

When the same-shape connector 11C of the water feed hose 1 is connected to each of the intermediary connectors 22A and 22B in the intermediary unit 2 comprising the above structure, the connection detection switches 153 detect the connection, and output a connection signal. When the control unit 155 detects a connection signal, the control unit 155 reads individual identification information corresponding to the connection signal from the memory 154, associates the information with each other, and outputs it as connection information. The connection information is wirelessly transmitted to the outside from the communication unit 156. It is possible to know to which intermediary unit 2 the water feed hose 1 is connected even from a distant place by receiving the transmitted connection information in an external dedicated terminal or a reception device. When the electronic unit 15 comprising the same function is mounted on the same-shape connector 11C of the water feed hose 1, it is possible to know details regarding which water feed hose 1 is connected, which side of the water feed hose 1 is connected, and to which portion of the intermediary unit 2 the water feed hose 1 is connected.

When the connection of a water feed path prepared by combining a plurality of water feed hoses 1 and intermediary units 2 in the entire length is confirmed, water is supplied, and thus, each power generation unit 12 generates electric power. The electric power generated by the power generation unit 12 is supplied to the electronic unit 15, is stored in the secondary battery 13, and is used when the intermediary unit 2 is next connected to the water feed hose 1.

The present embodiment comprises the LEDs 151 which are light sources, and the light emission control unit 152 which controls the turning on of the LEDs 151. Thus, when the connection of the same-shape connectors 11C to the intermediary connectors 22A and 22B is confirmed, the light emission pattern may be changed. For example, the LEDs 151 may be turned on, or the LEDs 151 may be repeatedly turned on and turned off at predetermined time intervals. The light emission color of the LEDs 151 may be changed from the color before connection. When the connection state of the water feed hoses 1 and the intermediary unit 2 is finally checked in a distant place, and a worker obtains the information of a place which is not connected (bad connection) based on determination, and rushes into the site, the worker can easily determine the joint portion having bad connection based on the light emission state of the LEDs 151.

In the fourth embodiment, the intermediary unit 2 is the water collecting unit 2A. However, the intermediary unit 2 may be a diversion unit comprising a single water feed hose 1 connected to the upstream side and two (or more) water feed hoses 1 connected to the downstream side. When the intermediary unit 2 is a diversion unit, a valve which adjusts the flow rate for the water feed hose 1 connected to the outlet 212 is incorporated. Each valve is opened and closed by hand or remote control. When each valve is operated by hand, a control lever corresponding to the valve is attached. When each valve is operated by remote control, a drive unit such as an electromagnetic valve or motor is attached. Since the communication unit 156 is provided, the electromagnetic valve or motor may be controlled via the communication unit 156.

In the hydroelectric power generation unit 12A of the present embodiment, the rotor 122 in which the fins 124A are attached to the outer circumference is provided in the flow channel of the housing 21. However, when the outlet 212 is formed so as to be sufficiently long to the downstream side from the point at which the central axes Xu of the intermediary connectors 22A of the two inlets 211 intersect each other, the same structure as the hydroelectric power generation units 12A of the first and second embodiments may be employed. Moreover, in the present embodiment, a single hydroelectric power generation unit 12A is provided in the housing 21 between the inlets 211 and the outlet 212. However, the hydroelectric power generation units 12A may be provided in the two inlets 211, respectively.

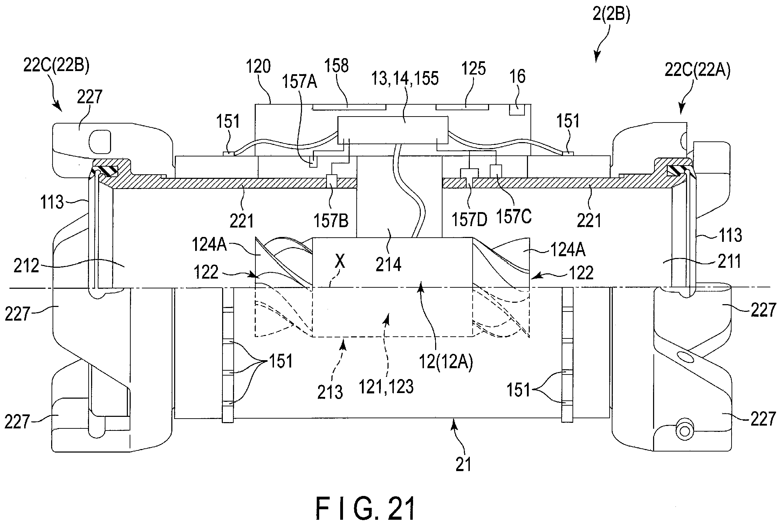

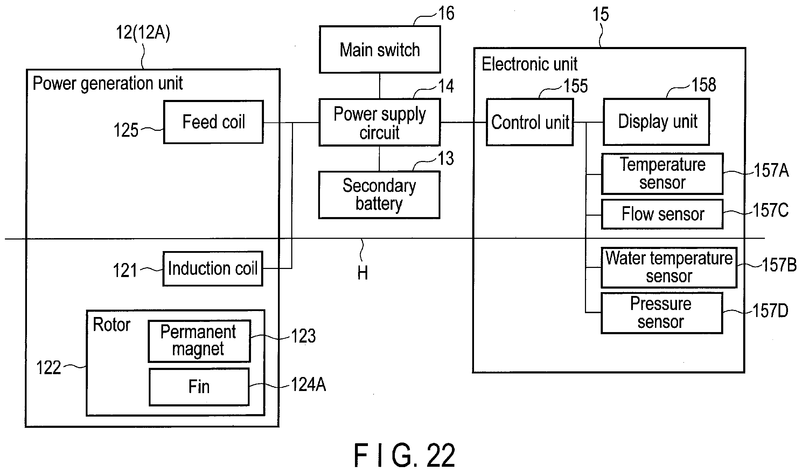

Now, this specification explains an intermediary unit 2 according to the fifth embodiment with reference to FIG. 21 and FIG. 22. The intermediary unit 2 is a relay unit 2B attached between water feed hoses when the water feed hoses are connected to each other. In the present embodiment, the intermediary unit 2 is provided between two water feed hoses. The intermediary unit 2 comprises an electronic unit 15 including various sensors for measuring the state of water flowing through the water feed hoses. The intermediary unit 2 comprises a power generation unit 12 for supplying electric power to drive these components.

Specifically, the intermediary unit 2 comprises a housing 21, and intermediary connectors 22C which are same-shape connectors at the both ends of the housing 21 as shown in FIG. 21. An attachment portion 221 provided in each intermediary connector 22C is directly inserted into an end part of the housing 21, and is fixed to the housing 21. Each intermediary connector 22C shown in FIG. 21 is a same-shape connector without a male or female type. Thus, each water feed hose connected to the intermediary unit 2 comprises same-shape connectors fitted into the intermediate connectors 22C at both ends. Since the intermediary connectors 22C are same-shape connectors, either intermediary connector 22C may be connected to a water feed hose.

When the water feed hose 1 of either the first embodiment or the second embodiment comprising a female connector 11A attached to the connector on the upstream side and a male connector 11B attached to the connector on the downstream side is connected, a first intermediary connector 22A provided on the upstream side is a female connector, and a second intermediary connector 22B provided on the downstream side is a male connector.

When the format of the connector of the water feed hose connected to the upstream side is different from that of the water feed hose connected to the downstream side, the intermediary unit 2 may be used as an adapter prepared to connect these connectors. In this case, the intermediary unit 2 may comprise the first intermediary connector 22A fitted into the connector attached to the downstream end of the water feed hose on the upstream side, and the second intermediary connector 22B fitted into the connector attached to the upstream end of the water feed hose on the downstream side.

As shown in FIG. 21 and FIG. 22, a power generation unit 12, a secondary battery 13, a power supply circuit 14, the electronic unit 15 and a main switch 16 are incorporated into the housing 21. The power generation unit 12 employs a hydroelectric power generation unit 12A of the same type as the fourth embodiment. When the hydroelectric power generation unit 12A of the first embodiment is employed, a rotor 122 may be provided between the attachment portions 221 of the intermediary connectors inserted from the both ends of the housing 21, and an induction coil 121 may be provided outside the housing 21 which is the outer circumference. The secondary battery 13, the power supply circuit 14 and the main switch 16 are provided in a manner similar to that of the fourth embodiment.

As shown in FIG. 22, the electronic unit 15 comprises, as a sensor, at least one of a temperature sensor 157A which measures the temperature of the housing 21, a water temperature sensor 157B which measures the temperature of the water flowing through the housing 21, a flow sensor 157C which measures the flow rate of the water flowing through the housing 21 and a pressure sensor 157D which measures the pressure in the housing 21.

The temperature sensor 157A is, for example, a thermocouple attached to the outer surface of the housing 21. The water temperature sensor 157B is, for example, a thermocouple attached to the inner surface of the housing 21. The flow sensor 157C may obtain the flow rate based on the number of revolutions of the rotor 122, using the induction coil 121 of the hydroelectric power generation unit 12A. Alternatively, the flow sensor 157C may be an ultrasonic flowmeter provided outside the housing 21. The pressure sensor 157D is attached to the housing 21 such that the detection portion is exposed from the inner surface of the housing 21. The type of the pressure sensor 157D may be either a mechanical type or an electronic type. For the pressure sensor 157D, an electronic type of piezoresistive pressure sensor is desirable as it is small and sensitive.

The electronic unit 15 comprises a control unit 155 which outputs state information including a value measured by at least one of the temperature sensor 157A, the water temperature sensor 157B, the flow sensor 157C and the pressure sensor 157D, and a display unit 158 which displays the state information output from the control unit 155. The display unit 158 is fixed to the outside of the housing 21, in the present embodiment, to the outside of a cover 120 as shown in FIG. 21.

The electronic unit 15 comprises LEDs 151 as a part of the display unit 158 as shown in FIG. 21. A plurality of LEDs 151 are arranged in the circumferential direction of the housing 21 in the vicinity of the intermediary connectors 22C or between each intermediary connector 22C and the cover 120. The LEDs 151 are controlled via a light emission control unit 152 in terms of the light emission pattern such as turning on and off.

The intermediary unit 2 of the fifth embodiment comprising the above structure is attached between the connectors of water feed hoses which would be directly connected to each other in a conventional technology. The intermediary unit 2 is allowed to generate electric power when water flows through the water feed hose since the intermediary unit 2 comprises the hydroelectric power generation unit 12A. The generated electric power is supplied to the electronic unit 15 via the power supply circuit 14. The state of the water flowing through the water feed hose is measured by the sensors mounted on the electronic unit 15, and is displayed in the display unit 158.

The light emission pattern of the LEDs 151 provided as a part of the display unit 158 is changed based on predetermined conditions for the output of each sensor with respect to, for example, lighting up, blinking or the change in the light emission color. For example, a worker can be notified of the occurrence of an abnormality by causing the LEDs 151 to light up when electric power is generated as water flows through the water feed hose and by causing the LEDs 151 to blink or changing the light emission color of the LEDs 151 when the temperatures of the temperature sensor 157A and the water temperature sensor 157B exceed predetermined values or when the flow rate measured by the flow sensor 157C and the pressure measured by the pressure sensor 157D are outside preset ranges. The worker can know the cause of the abnormality in detail by looking at the display unit 158 of the intermediary unit 2 in which the LEDs 151 indicate the abnormality.

The intermediary unit 2 of the present embodiment may comprise the LEDs 151 and connection detection switches 153 in the electronic unit 15 as shown in FIG. 2 of the first embodiment. When the intermediary unit 2 is provided between conventional water feed hoses, it is possible to confirm that the water feed hoses are assuredly connected to each other based on the light emission of the LEDs 151.

As shown in FIG. 22, the intermediary unit 2 should preferably comprise a feed coil 125 in the power generation unit 12. The feed coil 125 is provided outside the housing 21, and is supplied with electric power by an AC magnetic field generated by an external device provided so as to face the feed coil 125. The electric power supplied via the feed coil 125 is stored in the secondary battery. When the capacity of the secondary battery is sufficient for the time required to use the intermediary unit 2, the hydroelectric power generation unit 12A may not be provided.

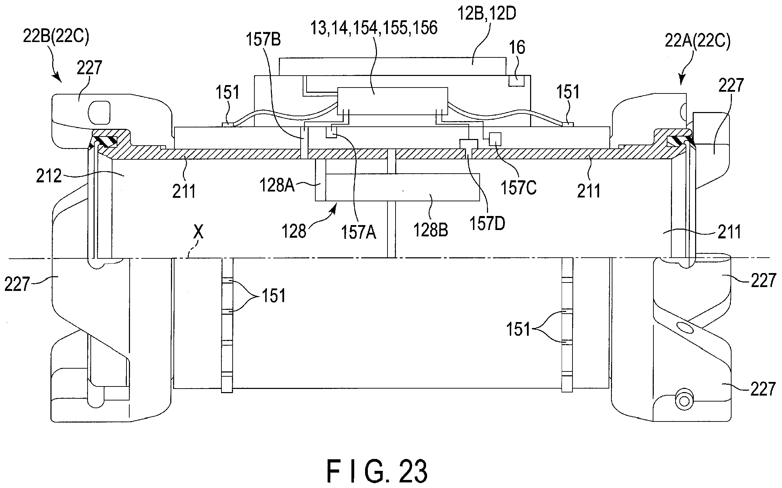

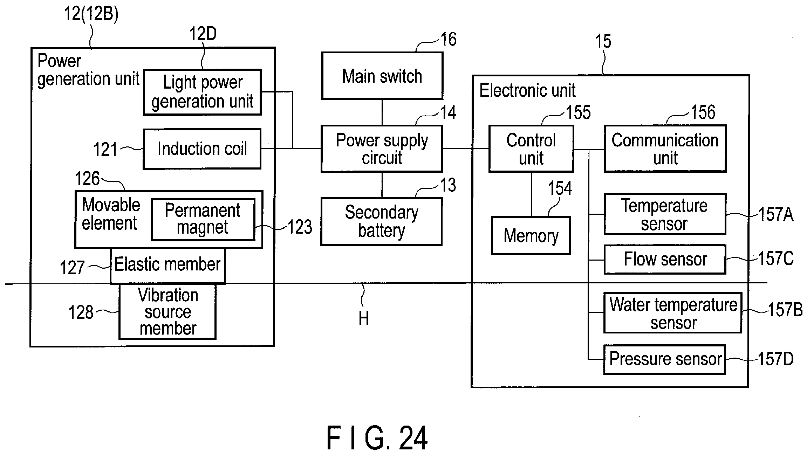

Now, this specification explains an intermediary unit 2 according to the sixth embodiment with reference to FIG. 23 and FIG. 24. The intermediary unit 2 of the present embodiment is a relay unit 2B which is similar to that of the fifth embodiment. The structures of the power generation unit 12 and the electronic unit 15 of the intermediary unit 2 of the present embodiment are partially different from those of the intermediary unit 2 of the fifth embodiment. The intermediary unit 2 of the present embodiment employs the vibration power generation unit 12B shown in the second embodiment as the power generation unit 12. The electronic unit 15 of the present embodiment comprises at least one of, for example, all of, a temperature sensor 157A, a water temperature sensor 157B, a flow sensor 157C and a pressure sensor 157D in a manner similar to that of the fifth embodiment. The electronic unit 15 of the fifth embodiment includes a display unit 158. The electronic unit 15 of the sixth embodiment further comprises the memory 154 and the communication unit 156 included in the electronic unit 15 of the fourth embodiment. Thus, the control unit 155 of the electronic unit 15 of the sixth embodiment comprises the functions of the control units 155 of the electronic units 15 of the fourth and fifth embodiments.

The intermediary unit 2 of the sixth embodiment includes a light power generation unit 12D as the power generation unit 12. The light power generation unit 12D generates electric power by receiving external light such as solar light. When the light power generation unit 12D is used outdoors during the day, electric power can be generated by solar light even without water supply in a water feed hose. Thus, a power source is not a problem when a water feed hose is used for several days while it is laid on.

The intermediary unit 2 of the sixth embodiment comprising the above structure is allowed to generate electric power by the vibration power generation unit 12B and charge a secondary battery 13 with electric power when a water feed hose is connected to the intermediary unit 2 and water flows through the water feed hose. The temperature of the housing 21 measured by the temperature sensor 157A of the electronic unit 15, the temperature of water measured by the water temperature sensor 157B, the flow rate measured by the flow sensor 157C and the pressure measured by the pressure sensor 157D are output from the control unit 155 at certain time intervals as state information associated with the individual identification information stored in the memory 154. The state information output from the control unit 155 is wirelessly transmitted by a communication unit 156.

Thus, even if a worker is away from the intermediary unit 2, the worker can easily confirm whether or not the state of the intermediary unit 2 is maintained as a state set in advance by receiving the state information transmitted from the communication unit 156 in a terminal configured to receive the state information. As the state information includes the individual identification information of the intermediary unit 2, when a large number of water feed hoses are connected and used, the state in each connection portion can be integrally controlled by attaching the intermediary unit 2 to each connection portion of the water feed hoses.

For example, when the intermediary unit 2 is attached to the connection portion of a fire hose used at the scene of a fire, the connection of the fire hose and the state of water supply can be confirmed by a firefighter. In addition, other firefighters can view the same information in any place within the range of the radio wave of the communication unit 156 as long as they carry a terminal configured to receive state information. Each firefighter knows the state of the fire hose used by himself/herself from the pump side to the discharge side. This is useful for firefighting.

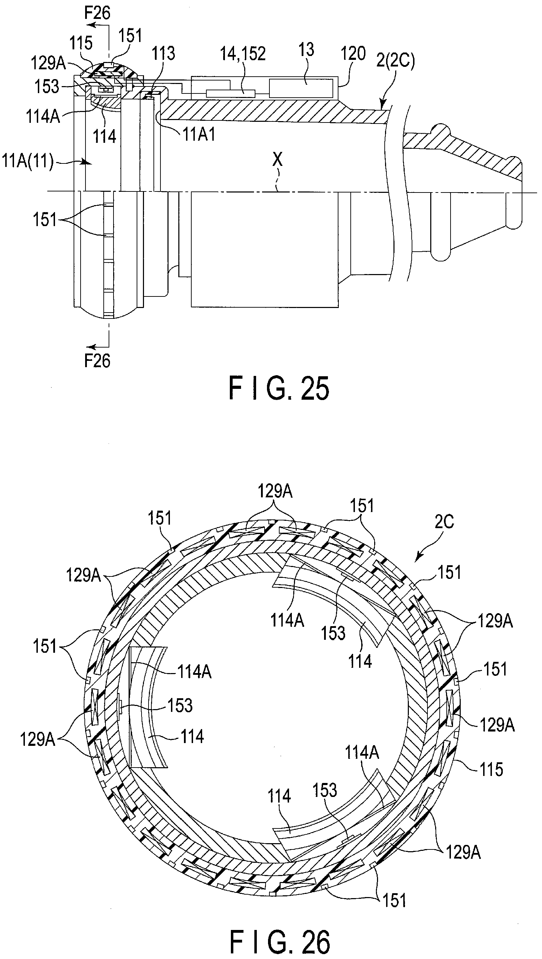

Now, this specification explains an intermediary unit 2 according to the seventh embodiment with reference to FIG. 25 and FIG. 26. The intermediary unit 2 of the present embodiment is a pipe spear 2C which is a discharge nozzle attached to the downstream end of a plurality of water feed hoses connected to each other, and comprises a female intermediary connector 22A fitted into a male connector 11B provided at the downstream end of the water feed hoses.

As shown in FIG. 25, the intermediary unit 2 comprises a secondary battery 13, a power supply circuit 14, an electronic unit 15 and a main switch 16 in the vicinity of the intermediary connector 22A, and covers these components with a cover 120. The electronic unit 15 includes LEDs 151, a light emission control unit 152 and connection detection switches 153. The LEDs 151 are provided at a position buried in the outer circumferential surface of a tire 115 attached to the outer circumference of the range in which latches 114 are provided. As shown in FIG. 26, a plurality of LEDs 151 are arranged at regular intervals in the circumferential direction of the tire 115.

The intermediary unit 2 of the present embodiment employs, as a power generation unit 12, a pressure power generation unit 12C including a piezoelectric material, in the present embodiment, piezoelectric rubber members 129A. As shown in FIG. 25 and FIG. 26, a plurality of piezoelectric rubber members 129A are buried at positions deeper than the LEDs 151 to the inner circumferential side of the tire 115, and are arranged at certain intervals in the circumferential direction. The piezoelectric rubber members 129A generate electric power by an external collision load accompanied by deformation. Since the buried piezoelectric rubber members 129A deform every time the tire 115 collides with the circumference and is flattened during use or delivery, the intermediary unit 2 is allowed to generate electric power.

The deformation caused by a collision load is temporary and is not continued. Thus, to stably supply the electric power generated by the piezoelectric rubber members 129A, the electric power is stored in the secondary battery 13, and is subsequently converted into the current and voltage set in the power supply circuit 14, and is supplied to the electronic unit 15. When the intermediary unit 2 is connected to a water feed hose, the connection detection switches 153 are pressed by the latches 114, and output connection signals. When the light emission control unit 152 detects a connection signal, the light emission control unit 152 changes the light emission pattern of the LEDs 151. For example, the light emission control unit 152 causes the LEDs 151 to light up, causes the LEDs 151 to blink a plurality of times or changes the light emission color of the LEDs 151. In this way, a worker can easily confirm that the intermediary unit 2 is correctly connected to the water feed hose.

The tire 115 comprising the built-in piezoelectric rubber members 129A of the pressure power generation unit 12C employed as the power generation unit 12 in the intermediary unit 2 of the present embodiment is configured to be attached to a female connector 11A. Thus, the tire 115 may be attached as the tire 115 of the water feed hoses 1 of the first and second embodiments, and the piezoelectric rubber members 129A may be employed as the power generation unit 12. When the piezoelectric rubber members 129A are incorporated into the tire 115 of the water feed hose 1 and are used as the power generation unit 12, the tire 115 collides with the circumference at a frequency higher than the intermediary unit 2 which is the pipe spear 2C, and thus, the generated electric power is also increased. Similarly, when the connector of a water collecting unit 2A, a diversion unit and a relay unit 2B is a female connector, the piezoelectric rubber members 129A may be incorporated into the tire 115 to generate electric power.

In the intermediary unit 2 of the present embodiment, the pressure power generation unit 12C is employed for the power generation unit 12. However, the hydroelectric power generation unit 12A of the first embodiment or the vibration power generation unit 12B of the second embodiment may be adopted. Further, a memory 154 and a communication unit 156 may be included in the electronic unit 15 of the intermediary unit 2 of the present embodiment such that connection information can be transmitted.

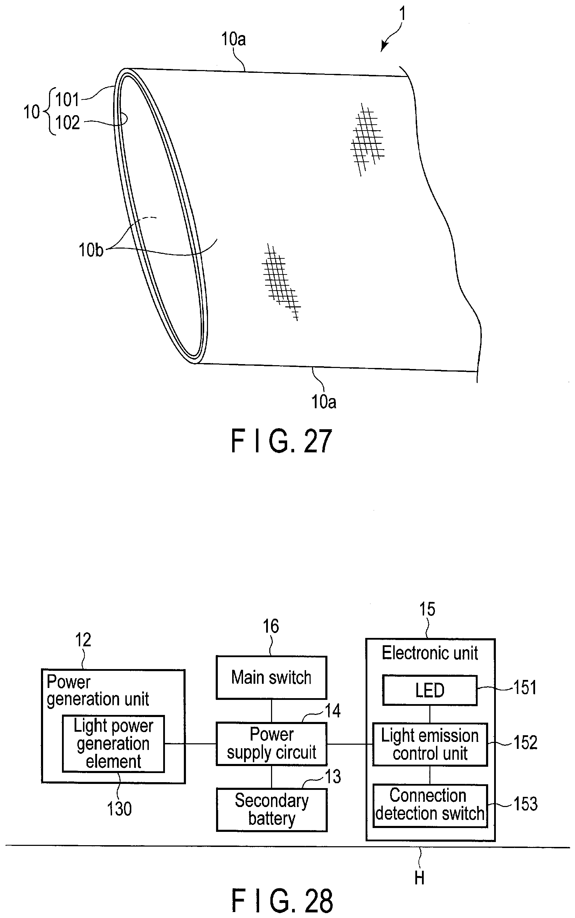

Now, this specification explains a water feed hose 1 according to the eighth embodiment of the present invention with reference to FIG. 27 to FIG. 30. FIG. 27 is a general perspective view of a hose 10 provided in the water feed hose 1 of the present embodiment. Here, the illustration of a connector 11 is omitted.

As described above, the hose 10 comprises a jacket 101 and a liner 102, and is crushed flat as shown in the figure in a state where no hydraulic pressure is applied to the inside. The hose 10 comprises a pair of ear portions 10a bending in a state where the hose 10 is crushed flat in this way, and a pair of abdomen portions 10b between the ear portions 10a.

As shown in FIG. 28, in the present embodiment, a power generation unit 12 includes a light power generation element 130 which generates electric power when it receives external light such as solar light. The electric power generated by the light power generation element 130 is supplied to a power supply circuit 14. The elements other than the power generation unit 12 shown in FIG. 28 may be provided in, for example, the connector 11. However, at least part of these elements may be attached to the hose 10.

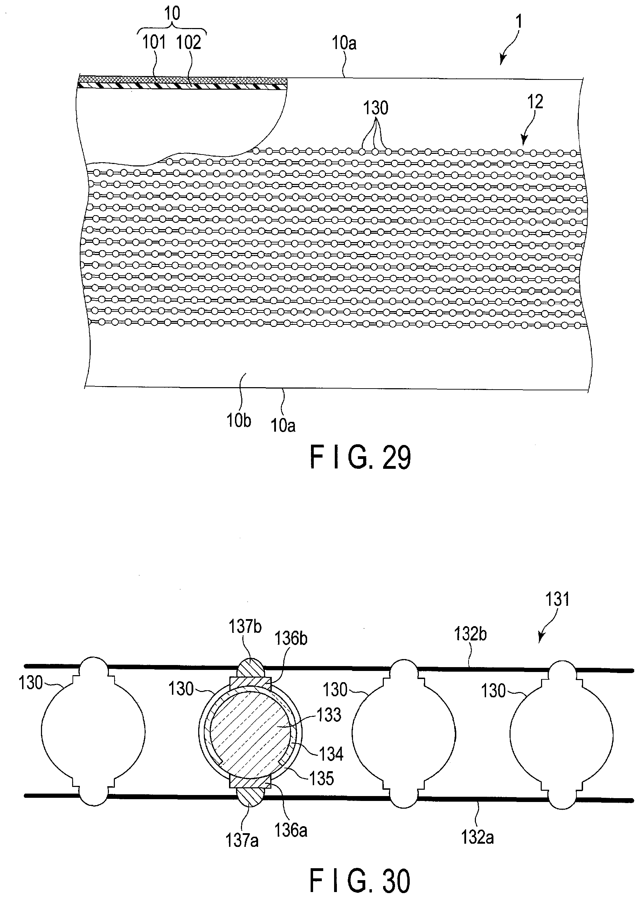

FIG. 29 is a general plan view of the abdomen portion 10b of the hose 10. A plurality of light power generation elements 130 are provided on the outer surface of the hose 10. The light power generation elements 130 may be provided in only one of the pair of abdomen portions 10b, or in both of them. The light power generation elements 130 may be provided in only a partial area of the abdomen portions 10b, or may be provided over the entire area of the length direction of the hose 10. The light power generation elements 130 may be provided in the ear portions 10a.

The light power generation elements 130 may be included in the yarn material of the jacket 101. FIG. 30 shows a structural example of the yarn material 131. The yarn material 131 comprises a pair of conductive lines 132a and 132b, and a plurality of light power generation elements 130. Each light power generation element 130 is, for example, a ball-like power generation cell. Various known structures can be applied to each light power generation element 130. For example, each light power generation element 130 comprises a ball-like p-type silicon single crystal 133, an n-type diffusion layer 134, a transparent antireflective film 135, a positive electrode 136a and a negative electrode 136b. The n-type diffusion layer 134 is formed by diffusing n-type impurities to a large part of the spherical surface of the p-type silicon single crystal 133. The antireflective film 135 covers the p-type silicon single crystal 133 and the n-type diffusion layer 134. The positive electrode 136a is in contact with the p-type silicon single crystal 133 and is connected to the conductive line 132a via a conductive joint material 137a. The negative electrode 136b is in contact with the n-type diffusion layer 134 and is connected to the conductive line 132b via a conductive joint material 137b.

In the yarn material 131 comprising this structure, a p-n junction is formed between the p-type silicon single crystal 133 and the n-type diffusion layer 134. When the p-n junction is illuminated with external light, electric power is generated by the photovoltaic power generation function of the light power generation element 130. This electric power is output to the conductive lines 132a and 132b via the positive electrode 136a and the negative electrode 136b, and is further output to the power supply circuit 14 connected to the conductive lines 132a and 132b. The ball-like light power generation elements 130 are allowed to effectively generate electric power by receiving light in a wide range. A technique related to this type of ball-like light power generation elements is disclosed in, for example, WO 2013/076794 A. Various known techniques, such as the technique disclosed in this publication, can be applied to the present embodiment.

The jacket 101 is woven by the warp extending in a length direction of the hose 10 and the woof extending in a circumferential direction. The yarn material 131 can be used as, for example, the warp of the jacket 101.

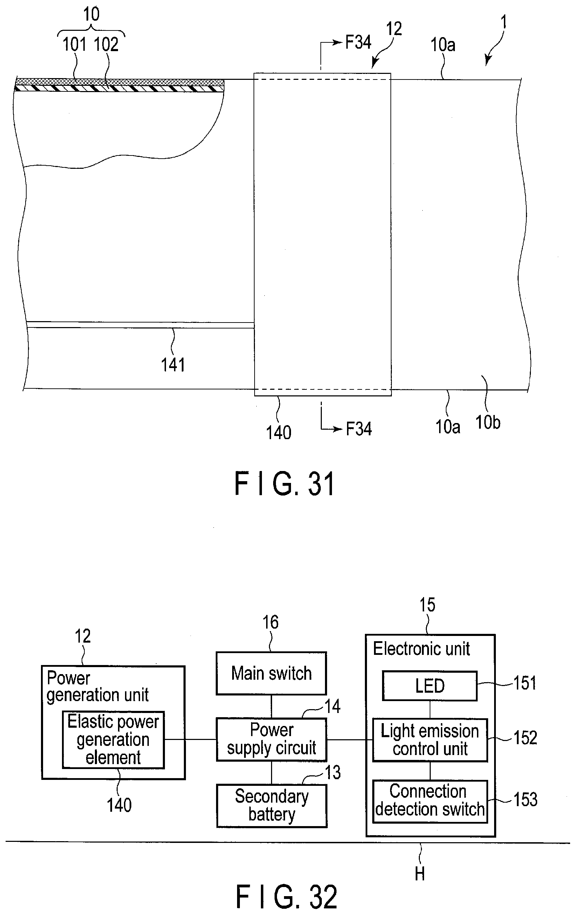

Now, this specification explains a water feed hose 1 according to the ninth embodiment of the present invention with reference to FIG. 31 to FIG. 34.

FIG. 31 is a general plan view showing the water feed hose 1 of the present embodiment. FIG. 31 mainly shows a hose 10. A connector 11 is omitted in FIG. 31.

As shown in FIG. 31 and FIG. 32, in the present embodiment, a power generation unit 12 includes an elastic power generation element 140 provided on the outer surface of the hose 10. The elastic power generation element 140 has flexibility and elasticity and generates electric power when it is extended or retracted by an external force or a vibration is applied. For example, the generated electric power is supplied to a power supply circuit 14 via a conductive line 141 extending along the outer surface of the hose 10. The elastic power generation element 140 is formed in, for example, a circular pattern. The hose 10 is inserted into the elastic power generation element 140. The components shown in FIG. 32 other than the power generation unit 12 may be provided in, for example, the connector 11. However, at least part of them may be attached to the hose 10.

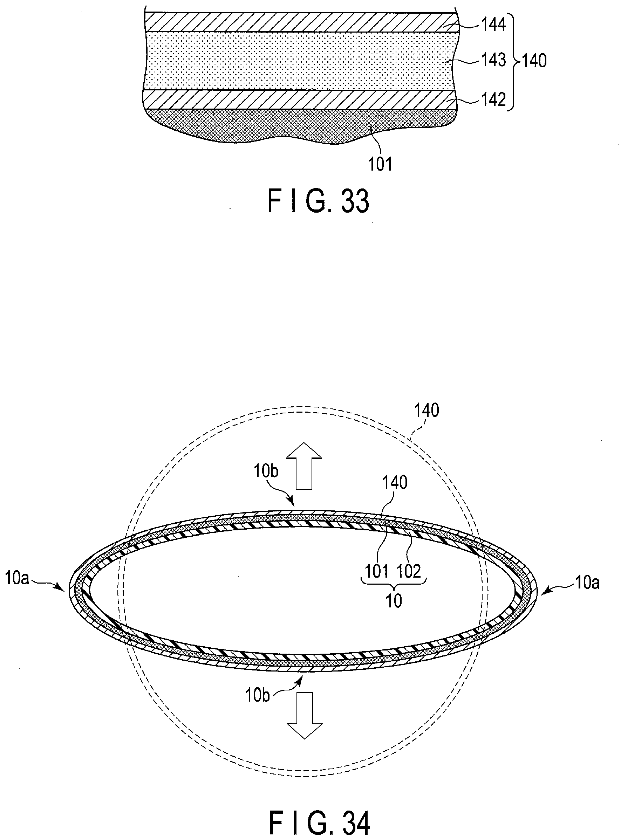

FIG. 33 is a cross-sectional view showing a structural example of the elastic power generation element 140. The elastic power generation element 140 comprises a positive electrode 142, a middle layer 143 and a negative electrode 144 in order from the jacket 101 side. For example, the middle layer 143 is formed of a silicone rubber composition containing silicon rubber, and has different ratios of peak intensity of infrared absorption spectrum in a thickness direction. As the positive electrode 142 and the negative electrode 144, for example, conductive cloth including a metal layer can be used. The elastic power generation element 140 comprising this structure generates electric power when distortion is applied to the middle layer 143 by an external force. A technique related to this type of power generation element is disclosed in, for example, JP 2016-139779 A. Various known techniques, such as the technique disclosed in this publication, can be applied to the present embodiment.

As shown in FIG. 34, the elastic power generation element 140 adheres tightly to the outer circumference of the hose 10 in a state where the hose 10 is flat. For example, in this state, stress is hardly applied to the elastic power generation element 140. When water is supplied, the hose 10 expands in a circle as shown in the dashed lines by hydraulic pressure. At this time, the elastic power generation element 140 is extended and generates electric power. Further, the elastic power generation element 140 may generate electric power by vibration at the time of water supply or deformation at the time of retraction.

When the elastic power generation element 140 is provided on the outer surface of the hose 10, the elastic power generation element 140 may be damaged by the friction with the ground. To prevent this damage, the elastic power generation element 140 may be provided between the aforementioned protection sleeve 103 and the hose 10. A protection member other than the protection sleeve 103 may cover the elastic power generation element 140.

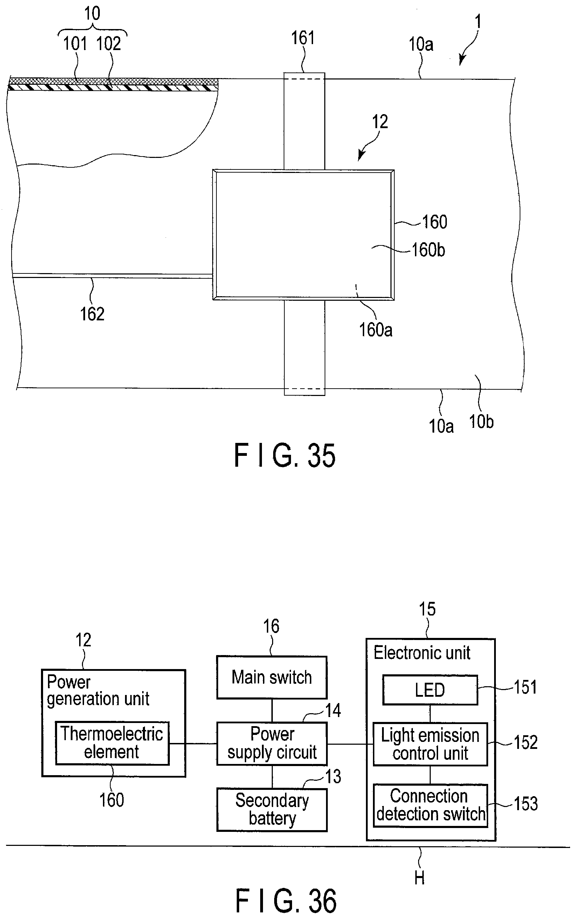

Now, this specification explains a water feed hose 1 according to the tenth embodiment of the present invention with reference to FIG. 35 to FIG. 37. FIG. 35 is a general plan view showing the water feed hose 1 of the present embodiment. FIG. 35 mainly shows a hose 10. A connector 11 is omitted in FIG. 35.

As shown in FIG. 35 and FIG. 36, in the present embodiment, a power generation unit 12 includes a thermoelectric element 160 provided on the outer surface of the hose 10. The thermoelectric element 160 comprises a first surface 160a, and a second surface 160b on a side opposite to the first surface 160a, and generates electric power by the difference in temperature between the first surface 160a and the second surface 160b. In the example of FIG. 35, the first surface 160a is in contact with the outer surface of the abdomen portion 10b of the hose 10. For example, the thermoelectric element 160 may be attached to the hose 10 by an elastic band 161 as shown in FIG. 35. However, another method may be used to attach the thermoelectric element 160. For example, the thermoelectric element 160 may be attached to the outer surface of the hose 10 by an adhesive. For example, the electric power obtained by the thermoelectric element 160 is supplied to a power supply circuit 14 via a conductive line 162 extending along the outer surface of the hose 10. The components shown in FIG. 36 other than the power generation unit 12 may be provided in, for example, the connector 11. However, at least part of them may be attached to the hose 10.

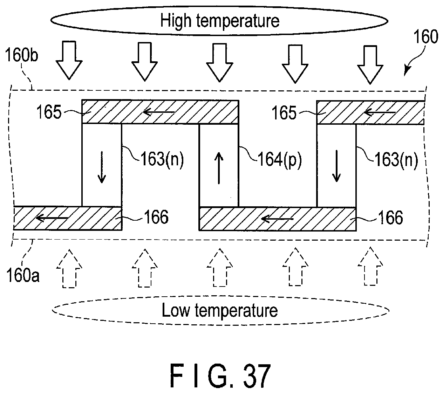

FIG. 37 shows a structural example of the thermoelectric element 160. For example, the thermoelectric element 160 generates electric power by using a Seebeck effect (or a Peltier effect), and comprises a plurality of n-type semiconductors 163, a plurality of p-type semiconductors 164, a plurality of positive electrodes 165 and a plurality of negative electrodes 166. The positive electrodes 165 are provided along the second surface 160b. The negative electrodes 166 are provided along the first surface 160a. The positive electrode 165 and the negative electrode 166 are connected to the both ends of each n-type semiconductor 163. Similarly, the positive electrode 165 and the negative electrode 166 are connected to the both ends of each p-type semiconductor 164.

When water is supplied, the temperature of the first surface 160a is low as it is cooled down by the water flowing through the hose 10. The second surface 160b is heated up by external temperature. In particular, when the hose 10 is used for firefighting, the second surface 160b is sufficiently heated up by the heat of fire, etc. Thus, the temperature of the second surface 160b becomes high. In each n-type semiconductor 163, electrons move to the low temperature side. In each p-type semiconductor 164, electrons move to the high temperature side. In this way, electrons move as shown by the arrows shown in the figure, thereby obtaining electric power.

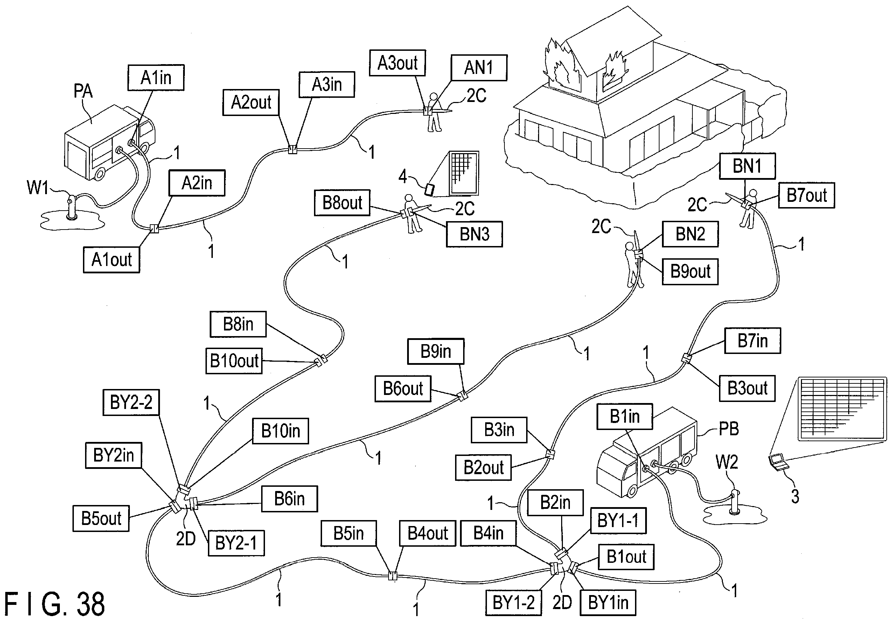

Now, this specification explains a water feed system S according to the eleventh embodiment of the present invention with reference to FIG. 38 to FIG. 41, using, as an example in which a plurality of water feed hoses 1 and a plurality of intermediary units 2 are used in combination, a case where a plurality of water feed hoses 1 (fire hoses) and a plurality of intermediary units 2 (diversion units 2D) are used to connect pumper trucks PA and PB to pipe spears 2C at the scene of a fire.

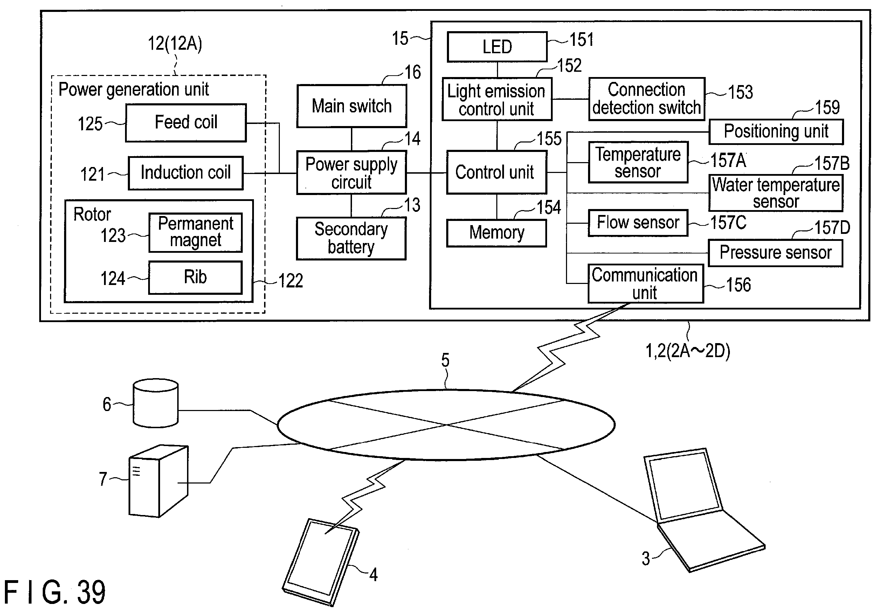

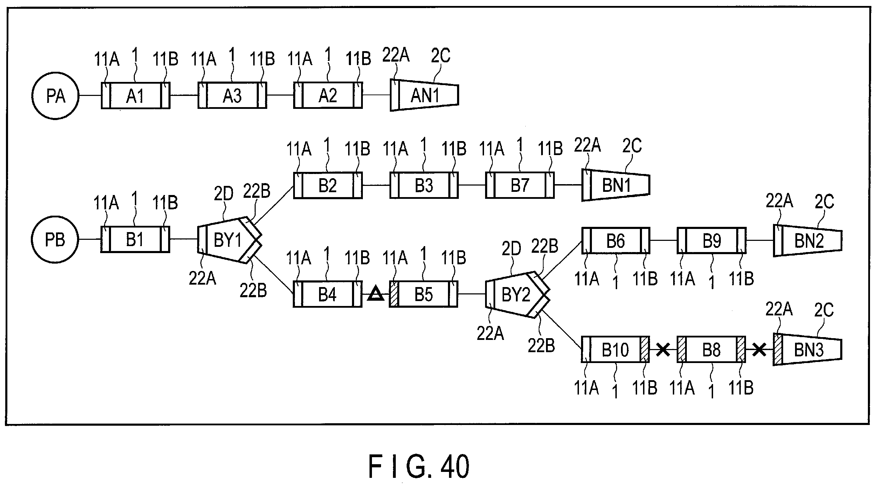

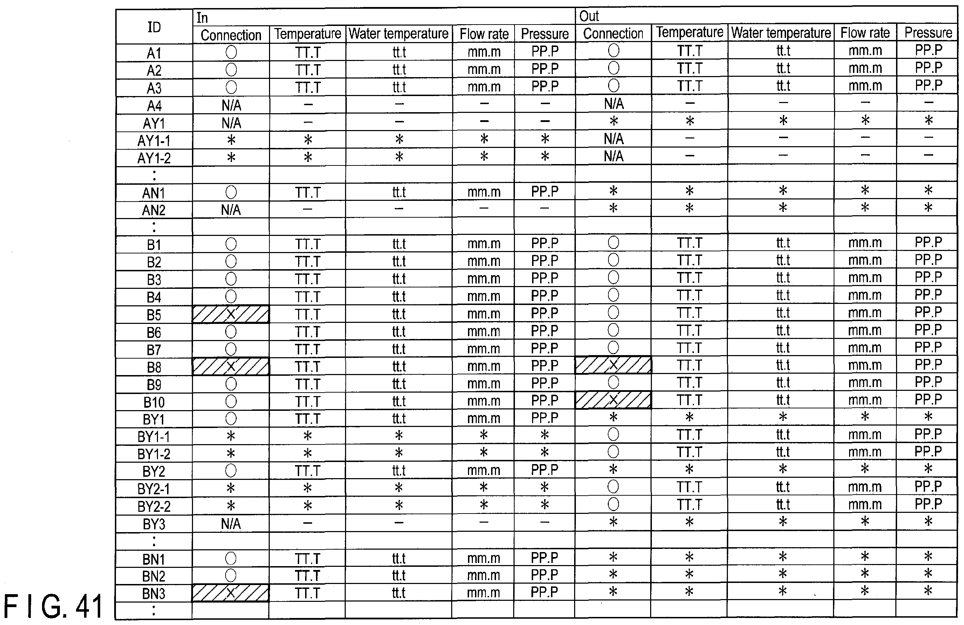

FIG. 38 schematically shows the locations of the pumper trucks PA and PB, the water feed hoses 1 and the intermediary units 2 at the scene of a fire. FIG. 39 is a block diagram of the water feed system S. In the present embodiment, all the electronic components mounted on each of the connectors 11 of the water feed hoses 1 and each of the intermediary connectors 22A and 22B of the intermediary units 2 used in the water feed system S comprise the same structure. Thus, only one of them is shown in FIG. 39 as a representative. FIG. 40 and FIG. 41 show a display example when the information integrally managed by the water feed system S is viewed in terminals 3 and 4. In FIG. 40, the connection state of the water hoses 1 and the intermediary units 2 is schematized. FIG. 41 shows a list of measurement data in the water feed hoses 1 and the intermediary units 2.

As shown in FIG. 38, the water feed system S of the present embodiment integrally recognizes and manages the connection state and the water feed state of the water feed hoses 1 and the intermediary units 2 used at the scene of a fire. Each of the connectors 11 (the female connectors 11A and the male connectors 11B or the same-shape connectors 11C) of the water feed hoses 1 and each of the intermediary connectors 22A and 22B (or the same-shape intermediary connectors 22C) of the intermediary units 2 comprises a power generation unit 12 as shown in the block diagram of FIG. 39. Thus, electric power can be supplied to an electronic unit 15 without providing an electric transmission cable along the water feed hose 1. When various functions such as sensors 157A to 157D and a communication unit 156 are mounted on the electronic unit 15, functions corresponding to purposes can be added to the water feed hose 1.

In the present embodiment, as shown in FIG. 39, a positioning unit 159 is provided in the electronic unit 15. Thus, it is possible to individually recognize the positions of the connectors 11 of the water feed hoses 1 and the intermediary connectors 22A and 22B of the intermediary units 2. Thus, even if the connection order or location differs depending on the situation of the site, the connection state of the water feed hoses 1 and the intermediary units 2 can be easily confirmed.

Now, the details of the present embodiment are explained. The electronic components mounted on each water feed hose 1 and each intermediary unit 2 are explained with reference to FIG. 39. The structures disclosed in each of the above embodiments can be appropriately applied to each water feed hose 1 and each intermediary unit 2. Here, as an example, each of the connectors 11 (the female connectors 11A and the male connectors 11B) of the water feed hoses 1 and each of the intermediary connectors 22A and 22B of the intermediary units 2 comprises the power generation unit 12 (hydroelectric power generation unit 12A) shown in the first embodiment. A secondary battery 13, a power supply circuit 14 and a main switch 16 are provided in the same manner as the first embodiment.

For example, the electronic unit 15 of the present embodiment comprises, of the structures of the electronic units 15 of the first to tenth embodiments, an LED 151 which is a light source, a light emission control unit 152, a connection detection switch 153, a memory 154, a control unit 155, a communication unit 156, a temperature sensor 157A, a water temperature sensor 157B, a flow sensor 157C and a pressure sensor 157D. In FIG. 39, the electronic unit 15 does not include a display unit 158. However, the electronic unit 15 may comprise the display unit 158 to the extent that can be used at the time of the demonstration of operation confirmation or individual setting.

The electronic unit 15 of the present embodiment further comprises a positioning unit 159. The positioning unit 159 calculates and outputs the own coordinates of position based on a Global Positioning System (GPS) signal or a signal obtained from a surrounding Wireless-Fidelity (Wi-Fi) base. The control unit 155 outputs location information in which the individual identification information stored in the memory is associated with the coordinates of position output from the positioning unit. The location information is transmitted from the communication unit 156 in a manner similar to that of connection information and state information. The connection information, state information and location information may be individually transmitted when they are obtained, or may be collectively transmitted at certain time intervals. When the communication unit 156 is allowed to perform bidirectional communication, the communication unit 156 may transmit requested information of connection information, state information and location information, or all the information, when a control signal is received from an external device.

The transmitted information is provided to the terminals 3 and 4 via a relay base 5 provided at the scene of a fire. The relay base 5 may be mounted on a command vehicle which takes command at the scene of a fire, or may use a public wireless communication network around the scene of a fire. FIG. 39 shows a state in which the terminal 3 is connected to the relay base 5 with a cable. However, the terminal 3 may be wirelessly connected to the relay base 5 in a manner similar to that of the terminal 4.

The water feed system S of the present embodiment obtains the information transmitted from all the connectors 11 of the water feed hoses 1 and the intermediary connectors 22A and 22B of the intermediary units 2 with the terminals 3 and 4, and allow the information to be viewed. The information transmitted from each communication unit 156 may be stored in a database 6 or a server 7 connected to the relay base. The database 6 and the server 7 are provided in the fire station to which the firefighters at the scene of a fire belong. The information may be viewed in a distant place away from the scene of the fire, for example, from a terminal in the fire station such that the information can be used for logistic support.

Now, this specification explains the function and operation of the water feed system S. FIG. 38 schematically shows a state in which two pumper trucks PA and PB show up at the scene of a fire, are supplied with water from different fire hydrants W1 and W2, respectively, and discharge water in four directions. The first pumper truck PA is supplied with water from the first fire hydrant W1 and supplies water to a single pipe spear 2C. The initial "A" is added to a first water feed path based on the first pumper truck PA. The second pumper truck PB is supplied with water from the second fire hydrant W2 and supplies water to three pipe spears 2C. The initial "B" is added to a second water feed path based on the second pumper truck PB.

Since water is supplied to only one pipe spear 2C in the first water feed path, a plurality of water feed hoses 1 are connected in series. In FIG. 38, three water feed hoses 1 are connected in series in the first water feed path. To distinguish the water feed hoses 1 from each other, they are denoted by A1, A2 and A3. The individual identification information of the connector 11 of the upstream side of each water feed hose 1 is denoted by Alin, A2in and A3in. The individual identification information of the connector 11 of the downstream side of each water feed hose 1 is denoted by Alout, A2out and A3out. The individual identification information of the intermediary connector 22A of the pipe spear 2C is denoted by AN1.

Similarly, in the second water feed path, as water is supplied to three pipe spears 2C, two diversion units 2D each of which divides the flow channel into two parts are provided on the path connecting the water feed hoses 1, thereby dividing the path into three parts. In FIG. 38, the second water feed path is structured by using ten water feed hoses 1 and two diversion units 2D. To distinguish the water feed hoses 1 from each other, they are denoted by B1, B2, B3, B4, B5, B6, B7, B8, B9 and B10. The individual identification information of the connector 11 of the upstream side of each water feed hose 1 is denoted by B1in, B2in, B3in, B4in, B5in, B6in, B7in, B8in, B9in and B10in. The individual identification information of the connector 11 of the downstream side of each water feed hose 1 is denoted by B1out, B2out, B3out, B4out, B5out, B6out, B7out, B8out, B9out and B10out. To distinguish two diversion units 2D from each other, they are denoted by B1Y and BY2. The individual identification information of the first intermediary connector 22A on the inlet 211 side of each diversion unit 2D is denoted by BY1in and BY2in. The individual identification information of the second intermediary connector 22B of each of two outlets 212 sides of each diversion unit 2D is denoted by BY1-1, BY1-2, BY2-1 and BY2-2. The individual identification information of the intermediary connector 22A of each of three pipe spears 2C is denoted by BN1, BN2 and BN3.

When the water feed hoses 1 and the intermediary units 2 are promptly connected at the scene of the fire, connection information is transmitted from the water feed hoses 1 and the intermediary units 2. Thus, it is possible to confirm whether or not all the water feed hoses 1 and the intermediary units 2 are connected in the terminal 3 provided on the second pumper PB side and the terminal 4 which is carried by the firefighter who operates the pipe spear 2C. The terminals 3 and 4 may be provided at any position at the scene of the fire as long as they can communicate with the relay base 5.

In FIG. 38, the water feed hose 1 denoted by B8 is not connected to the pipe spear 2C of the second water feed path, and the water feed hose 1 denoted by B10 is not connected to the water feed hose 1 denoted by B8. This situation can be easily confirmed by the display in which the connection state is schematized as shown in FIG. 40 in the terminals 3 and 4. The display shown in FIG. 40 is prepared by pairing the connectors 11 and the intermediary connectors 22A and 22B with the other-side connectors to be connected by associating the connectors 11 and the intermediary connectors 22A and 22B located at substantially the same coordinates of position with each other based on the coordinates of position obtained by the positioning units 159 of the connectors 11 and the intermediary connectors 22A and 22B. Thus, firefighters can connect the water feed hoses 1 in the site without worrying about the order or locations when they lay the water feed hoses 1. To determine whether or not each connector is correctly connected to the other-side connector, the presence or absence of connection is determined based on the connection information of the paired connectors 11 and intermediary connectors 22A and 22B.

In FIG. 40, nothing is displayed in the portions which are correctly connected. When neither a connector nor the other-side connector transmits connection information, for example, the symbol "×" is displayed as the connectors are removed from each other. When one of the paired connectors does not transmit connection information, for example, the symbol of a triangle is shown. When one of the paired connectors does not transmit connection information, the occurrence of a bad connection is considered. In which connector a bad connection occurs can be confirmed by the list of FIG. 41. The symbols to be displayed are not limited to the above examples.

In the present embodiment, FIG. 41 reveals that a bad connection occurs in the portion in which the individual identification information is B5in, that is, the connector 11 of the upstream side of the water feed hose 1 denoted by B5. Regarding the location of the connector 11 denoted by B5in, it is possible to easily know to which position of the second water feed path the water feed hose 1 denoted by B5 is connected with reference to the display indicating the connection state of FIG. 40. When a connector 11 or an intermediary connector 22A or 22B which is not connected is present, as described in the first embodiment, the light emission pattern of the LEDs 151 of the electronic unit 15 differs from that of the others. Thus, the portion to be dealt with can be easily found in the site.

When all the connections are confirmed, and water supply is started, the power generation unit 12 of each unit generates electric power. The data measured by the temperature sensors 157A, the water temperature sensors 157B, the flow sensors 157C and the pressure sensors 157D is transmitted as state information from the communication units 156. The measured values can be easily confirmed by the list shown in FIG. 41. When an abnormality in which the temperature or water temperature obtained by the temperature sensor 157A or water temperature sensor 157B exceeds a threshold is detected, the abnormality is indicated by outputting a warning to the display of FIG. 41 or displaying a mark or symbol in the display of FIG. 40. It is possible to indicate the place in which an abnormality is detected in the site by changing the light emission pattern of the LEDs 151 of the electronic unit 15 of each unit. When the temperature or water temperature exceeds a threshold, it is expected that the water feed hose 1 or the intermediary unit 2 is exposed to the source of heat such as fire. Thus, when a warning is output, the warning may include information for prompting the water feed hose 1 or intermediary unit 2 indicating an abnormality to be moved away from the source of heat.

Similarly, when an abnormality in which the flow rate or pressure measured by the flow sensor 157C or pressure sensor 157D is outside a predetermined set range is detected, the abnormality is indicated by outputting a warning to the display of FIG. 41 or displaying a mark or symbol in the display of FIG. 40. The place in which an abnormality is detected is indicated in the site by changing the light emission pattern of the LEDs 151 of the electronic unit 15 of each unit. When the flow rate or pressure is outside the set range, it is expected that the water feed hose 1 is bent in the middle, or the water feed hose 1 is interposed between objects and is flattened, or the water feed hose 1 has an unallowable hole. Thus, when a warning is output, the warning may include information for prompting the water feed hose 1 or intermediary unit 2 indicating an abnormality to be confirmed.

As described above, the water feed system S of the eleventh embodiment is allowed to easily manage the connection state of the water feed hoses 1 and the intermediary units 2 or the water feed state after connection in an integral manner when the water feed hoses 1 and the intermediary units 2 are connected to structure a water feed path at the scene of a fire.

In the water feed system S of the eleventh embodiment, to determine the other-side connector for each water feed hose 1 and intermediary unit 2, the location information obtained in the positioning unit 159 is used. In place of the positioning unit 159, a proximity sensor may be provided in the electronic unit 15. When the other-side connector is detected by the proximity sensor, pairing may be performed by communicating with the communication unit 156 of the other side by the own communication unit 156.

A water feed system comprising a function similar to that of the water feed system S of the eleventh embodiment may be structured by connecting the intermediary units 2 (the water collecting unit 2A and the relay units 2B) of the fourth to sixth embodiments and the intermediary unit 2 (the diversion unit 2D) of the eighth embodiment to the portions between conventional water feed hoses and conventional intermediary units (pipe spears) which do not comprise the power generation unit 12 or the electronic unit 15.

In the eleventh embodiment, this specification explains an example in which fire hoses laid at the scene of a fire are connected as the water feed system S. However, the water feed system S may be also applied to a situation in which the water feed hoses 1 are connected and used to drain water in a flooded area.

The present invention is explained based on the first to eleventh embodiments. These embodiments are merely examples to facilitate understanding of the present invention when it is implemented. Therefore, each structure can be implemented by replacing it by a structure comprising a similar function within a range which does not exceed the scope when the present invention is implemented. These structures are included in the present invention. Even if some of the structures explained in the embodiments are combined with each other or replaced by each other, such implementation is included in the present invention. For example, in the water feed hose 1 of the first embodiment, the female connector 11A and the male connector 11B may be replaced by the same-shape connector 11C of the water feed hose 1 of the third embodiment. The intermediary connectors 22A and 22B of the intermediary units 2 of the fourth to fifth embodiments may be replaced by the female connector 11A and the male connector 11B of the first embodiment. Further, the structures of the electronic units 15 of the first to eleventh embodiments may be adopted for the electronic unit 15 of any embodiment.

### Reference Signs List

1 ... Water feed hose, 2 ... Intermediary unit, 2A ... Water collecting unit (intermediary unit), 2B ... Relay unit (intermediary unit), 2C ... Pipe spear (intermediary unit), 2D ... Diversion unit (intermediary unit), 10 ... Hose, 11 .. . Connector, 11A ... Female connector (connector), 11B ... Male connector (connector), 11C ... Same-shape connector (connector), 12 ... Power generation unit, 12A ... Hydroelectric power generation unit (power generation unit), 12B ... Vibration power generation unit (power generation unit), 12C ... Pressure power generation unit (power generation unit), 13 ... Seconary battery, 14 ... Power supply circuit, 15 ... Electronic unit, 16 ... Main switch, 21 ... Housing, 22A ... (First) intermediary connector, 22B ... (Second) intermediary connector, 22C ... Intermediary connector, 121 ... Induction coil, 121A ... Coil portion, 122 ... Rotor, 123 ... Permanent magnet, 124 ... Rib, 124A ... Fin, 125 ... Feed coil, 126 ... Movable element, 127 ... Elastic member, 128 ... Vibration source member, 129 ... Piezoelectric element, 129A ... Piezoelectric rubber members (piezoelectric material), 130 ... Light power generation element, 140 ... Elastic power generation element, 151 ... LED, 152 ... Light emission control unit, 153 ... Connection detection switch, 154 ... Memory, 155 ... Control unit, 156 ... Communication unit, 157A ... Temperature sensor, 157B ... Water temperature sensor, 157C ... Flow sensor, 157D ... Pressure sensor, 158 ... Display unit, 159 ... Positioning unit, 160 .. . Thermoelectric element, S ... Water feed system, X, Xd, Xu ... Central axis

## Claims

1. A water feed hose (1) comprising:
a hose (10);
a connector (11) fixed to an end part of the hose (10);
a power generation unit (12) which generates electric power in a state attached to the connector (11) or the hose (10);
a secondary battery (13) charged with the electric power generated by the power generation unit (12);
a power supply circuit (14) which supplies, at a preset current and voltage, the electric power stored in the secondary battery (13) or the electric power generated by the power generation unit (12);
an electronic unit (15) which operates with the electric power supplied via the power supply circuit (14) **characterized by**,
a main switch (16) which switches the power supply circuit (14) to a state in which electric power is supplied to the electronic unit (15),
wherein
the electronic unit (15) includes:
a light source (151) including at least one of an LED and an organic EL;
a light emission control unit (152) which controls a pattern for causing the light source to emit light (151); and
a connection detection switch (153) which outputs a connection signal when an other-side connector (11) fitted into the connector (11) is connected, and
the light emission control unit (152) changes the pattern for causing the light source (151) to emit light when the connection signal is detected.

2. The water feed hose (1) of claim 1, **characterized in that**
the power generation unit (12) includes a hydroelectric power generation unit (12A) comprising:
an induction coil (121) comprising a plurality of coil portions (121A) wound based on a radial line perpendicular to a central axis of the connector (11) such that the coil portions (121A) are provided in a circumferential direction in an outer circumference of the connector (11);
a rotor (122) rotatably provided along an inner circumferential surface of the connector (11) and including a cylindrical portion (122A) comprising a structure for preventing the rotor (122) from being washed away by a flow of water in a direction along the central axis for the connector (11), the structure being provided on an outer circumferential surface side;
a plurality of permanent magnets (123) provided in a circumferential direction on an outer circumferential surface of the cylindrical portion (122A) and generating magnetic fields, respectively, in the radial direction; and
a plurality of ribs (124) provided along an inner circumferential surface of the cylindrical portion (122A) and inclined in a circumferential direction from a position parallel to the central axis,
a member for preventing the rotor (122) from being washed away for the connector (11) is not provided inside the cylindrical portion (122A), and
the hydroelectric power generation unit (12A) generates electric power when water flows through the hose (10) and the rotor (122) is rotated in a single direction.

3. The water feed hose (1) of claim 1, **characterized in that**
the power generation unit (12) includes a vibration power generation unit (12B) comprising:
an induction coil (121) fixed to the connector (11);
a movable element (126) which is movable in a direction crossing a winding central line of the induction coil (121);
a permanent magnet (123) mounted on the movable element (126) such that a magnetic line of force is along the winding central line of the induction coil (121); and
an elastic member (127) connecting the movable element (126) to the connector (11) so as to vibrate in a direction in which a magnetic field for the induction coil (121) changes, and
the vibration power generation unit (12B) generates electric power from displacement of the movable element (126) due to vibration of the connector (11).

4. The water feed hose (1) of claim 1, **characterized in that**
the power generation unit (12) includes a piezoelectric element (129) which generates electric power from a collision load applied when an other-side connector fitted into the connector (11) is connected to the connector (11).

5. The water feed hose (1) of claim 1, **characterized in that**
the power generation unit (12) includes a piezoelectric material (129A) provided in an outer circumference of the connector (11) and generating electric power from a collision load applied from outside and accompanied by deformation.

6. The water feed hose (1) of claim 1, **characterized in that**
the power generation unit (12) includes a hydroelectric power generation unit (12A) comprising:
an induction coil (121) comprising a plurality of coil portions (121A)wound based on a radial line perpendicular to a central axis of the connector (11) such that the coil portions (121A) are provided in a circumferential direction in an outer circumference of the connector (11);
a rotor (122) provided along an inner circumferential surface of the connector (11) and rotated when water flows through the hose (10); and
a plurality of permanent magnets (123) provided in a circumferential direction of the rotor (122) and generating magnetic fields, respectively, in the radial direction,
the hydroelectric power generation unit (12A) generates electric power when water flows through the hose (10) and the rotor (122) is rotated in a single direction,
the induction coil (121) also functions as a feed coil (125) supplied with electric power by electromagnetic induction while the connector (11) is provided in an AC magnetic field generated by an external device, and
electric power supplied via the induction coil (121) functioning as the feed coil (125) is stored in the secondary battery (13).

7. The water feed hose (1) of claim 1, **characterized in that**
the power generation unit (12) includes a plurality of ball-like light power generation elements (130) which generate electric power from external light,
the hose (10) includes a jacket (101) woven from a yarn material (131) including the light power generation elements (130), and a liner (102) provided as an interior of the jacket (101), and is crushed into a flat shape comprising a pair of bent ear portions (10a) and a pair of abdomen portions (10b) between the ear portions (10a) in a state where no hydraulic pressure is applied to inside, and
the yarn material (131) including the light power generation elements (130) is used as warp extending in a length direction of the hose (10) in the abdomen portions (10b).

8. The water feed hose (1) of claim 1, **characterized in that**
the power generation unit (12) includes an elastic power generation element (140) attached to the hose (10) and generating electric power when the hose (10) expands or retracts or vibrates,
the hose (10) is crushed into a flat shape comprising a pair of ear portions (10a) and a pair of abdomen portions (10b) between the ear portions (10a) in a state where no hydraulic pressure is applied to inside of the hose (10), and no stress is applied to the elastic power generation element (140) in this state, and
in a state where hydraulic pressure is applied to the inside of the hose (10), the hose (10) expands such that its cross-sectional surface is circular, and the elastic power generation element (140) is extended, thereby generating electric power.

9. The water feed hose (1) of claim 1, **characterized in that**
the power generation unit (12) includes a thermoelectric element (160) comprising:
a first surface (160a) facing the hose (10);
a second surface (160b) on a side opposite to the first surface (160a);
a negative electrode (166) provided on the first surface (160a);
a positive electrode (165) provided on the second surface (160b);
an n-type semiconductor (163) connected to the negative electrode (166) and the positive electrode (165); and
a p-type semiconductor (164) connected to the negative electrode (166) and the positive electrode (165), and
the thermoelectric element (160) generates electric power from a difference in temperature between the first surface (160a) and the second surface (160b) in a state where a temperature of the first surface (160a) is made low by water flowing through the hose (10) and a temperature of the second surface (160b) is made high by external heat.

10. The water feed hose (1) of any one of claims 1 to 9, **characterized in that**
the light sources (151) are arranged in a circumferential direction on an outer surface of the connector (11).

11. The water feed hose (1) of any one of claims 1 to 9, **characterized in that**
the light sources (151) are arranged in an axial direction on an outer surface of the connector (11).

12. The water feed hose (1) of one of claims 1 to 11, **characterized in that** the electronic unit (15) includes:
at least one of a temperature sensor (157A) which measures a temperature of the connector (11), a water temperature sensor (157B)which measures a temperature of water flowing through the hose (10), a flow sensor (157C) which measures a flow rate of water flowing through the hose (10), and a pressure sensor (157D) which measures a pressure inside the hose (10);
a control unit (155) which outputs state information including a value measured by at least one of the temperature sensor (157A), the water temperature sensor (157B), the flow sensor (157C) and the pressure sensor (157D); and
a display unit (158) fixed to outside of the connector (11) and displaying the state information.

13. The water feed hose (1) of one of claims 1 to 12, **characterized in that** the electronic unit (15) includes:
a memory (154) which stores individual identification information of the connector (11);
a control unit (155) which outputs connection information in which the individual identification information is associated with the connection signal; and
a communication unit (156) which wirelessly transmits the connection information.

14. The water feed hose (1) of claim 13, **characterized in that**
the control unit (155) outputs the connection information when a control signal is received from outside via the communication unit (156).

15. The water feed hose (1) of one of claims 1 to 11, **characterized in that** the electronic unit (15) includes:
at least one of a temperature sensor (157A) which measures a temperature of the connector (11), a water temperature sensor (157B) which measures a temperature of water flowing through the hose (10), a flow sensor (157C) which measures a flow rate of water flowing through the hose (10), and a pressure sensor (157D) which measures a pressure inside the hose (10);
a memory (154) which stores individual identification information of the connector (11);
a control unit (155) which outputs state information in which a value measured by at least one of the temperature sensor (157A), the water temperature sensor (157B), the flow sensor (157C) and the pressure sensor (157D) is associated with the individual identification information; and
a communication unit (156) which wirelessly transmits the state information.

16. The water feed hose (1) of claim 15, **characterized in that**
the control unit (155) outputs the state information when a control signal is received from outside via the communication unit (156).

17. The water feed hose (1) of one of claims 13 to 16, **characterized in that**
the electronic unit (15) operates when an activation signal is received from outside via the communication unit (156), and the electronic unit (15) transitions to a standby state in which power consumption other than power consumption for reception in the communication unit (156) is reduced when a standby signal is received from outside via the communication unit (156).

18. The water feed hose (1) of one of claims 13 to 17, **characterized in that**
the electronic unit (15) includes a positioning unit (159) which calculates and outputs coordinates of position based on a GPS signal or a signal obtained from a surrounding Wi-Fi base,
the control unit (155) outputs location information in which the individual identification information is associated with the coordinates of position, and
the communication unit (156) transmits the location information.

## Patentansprüche

1. Wasserzulaufschlauch (1), umfassend:
einen Schlauch (10);
einen Verbinder (11), der an einem Endteil des Schlauchs (10) fixiert ist;
eine Stromerzeugungseinheit (12), die in einem an den Verbinder (11) oder den Schlauch (10) angeschlossenen Zustand elektrischen Strom erzeugt,
eine Sekundärbatterie (13), die mit dem von der Stromerzeugungseinheit (12) erzeugten elektrischen Strom geladen wird,
einen Stromversorgungsschaltkreis (14), der mit einer voreingestellten Stromstärke und Spannung den in der Sekundärbatterie (13) gespeicherten elektrischen Strom oder den von der Stromerzeugungseinheit (12) erzeugten elektrischen Strom bereitstellt;
eine elektronische Einheit (15), die mit dem über den Stromversorgungsschaltkreis (14) bereitgestellten elektrischen Strom arbeitet, **gekennzeichnet durch**,
einen Hauptschalter (16), der den Stromversorgungsschaltkreis (14) in einen Zustand schaltet, in dem der elektronischen Einheit (15) elektrischer Strom bereitgestellt wird,
wobei
die elektronische Einheit (15) beinhaltet:
eine Lichtquelle (151), die mindestens eine LED oder eine organische EL beinhaltet,
eine Lichtemissionssteuereinheit (152), die ein Muster steuert, um zu bewirken, dass die Lichtquelle (151) Licht aussendet; und
einen Verbindungsdetektionsschalter (153), der ein Verbindungssignal ausgibt, wenn ein anderseitig in den Verbinder (11) eingepasster Verbinder (11) verbunden wird, und
die Lichtemissionssteuereinheit (152) das Muster ändert, um zu bewirken, dass die Lichtquelle (151) Licht aussendet, wenn das Verbindungssignal detektiert wird.

2. Wasserzulaufschlauch (1) nach Anspruch 1, **dadurch gekennzeichnet, dass**
die Stromerzeugungseinheit (12) eine hydroelektrische Stromerzeugungseinheit (12A) beinhaltet, umfassend:
eine Induktionsspule (121), die eine Vielzahl von Spulenabschnitten (121A) umfasst, die bezogen auf eine radiale Linie senkrecht zu einer Mittelachse des Verbinders (11) so gewickelt sind, dass die Spulenabschnitte (121A) in einer Umfangsrichtung an einem Außenumfang des Verbinders (11) vorgesehen sind,
einen Rotor (122), der drehbar entlang einer Innenumfangsfläche des Verbinders (11) vorgesehen ist und einen zylindrischen Abschnitt (122A) beinhaltet, der eine Struktur umfasst, um zu verhindern, dass der Rotor (122) durch einen Wasserfluss in einer Richtung entlang der Mittelachse des Verbinders (11) weggespült wird, wobei die Struktur auf einer Seite der Außenumfangsfläche vorgesehen ist;
eine Vielzahl von Permanentmagneten (123), die in einer Umfangsrichtung auf einer Außenumfangsfläche des zylindrischen Abschnitts (122A) vorgesehen sind und jeweils Magnetfelder in der radialen Richtung erzeugen, und
eine Vielzahl von Rippen (124), die entlang einer Innenumfangsfläche des zylindrischen Abschnitts (122A) und in einer Umfangsrichtung von einer Position parallel zur Mittelachse geneigt, vorgesehen sind,
ein Element, um zu verhindern, dass der Rotor (122) aus dem Verbinder (11) weggespült wird, ist nicht innerhalb des zylindrischen Abschnitts (122A) vorgesehen, und
die hydroelektrische Stromerzeugungseinheit (12A) erzeugt elektrischen Strom, wenn Wasser durch den Schlauch (10) fließt und der Rotor (122) in einer einzigen Richtung gedreht wird.

3. Wasserzulaufschlauch (1) nach Anspruch 1, **dadurch gekennzeichnet, dass**
die Stromerzeugungseinheit (12) eine Vibrationsstromerzeugungseinheit (12B) beinhaltet, umfassend:
eine Induktionsspule (121), die an dem Verbinder (11) fixiert ist;
ein bewegliches Element (126), das in einer Richtung, die eine Windungsmittellinie der Induktionsspule (121) kreuzt, beweglich ist;
einen Permanentmagneten (123), der so auf dem beweglichen Element (126) montiert ist, dass eine Magnetkraftlinie entlang der Windungsmittellinie der Induktionsspule (121) verläuft; und
ein elastisches Element (127), das das bewegliche Element (126) so mit dem Verbinder (11) verbindet, dass er in einer Richtung vibriert, in der sich ein Magnetfeld der Induktionsspule (121) ändert, und
die Vibrationsstromerzeugungseinheit (12B) elektrischen Strom aus einer Verschiebung des beweglichen Elements (126) aufgrund von Vibration des Verbinders (11) erzeugt.

4. Wasserzulaufschlauch (1) nach Anspruch 1, **dadurch gekennzeichnet, dass**
die Stromerzeugungseinheit (12) ein piezoelektrisches Element (129) beinhaltet, das elektrischen Strom aus einer Kollisionskraft erzeugt, die aufgebracht wird, wenn ein anderseitig in den Verbinder (11) eingepasster Verbinder mit dem Verbinder (11) verbunden wird.

5. Wasserzulaufschlauch (1) nach Anspruch 1, **dadurch gekennzeichnet, dass**
die Stromerzeugungseinheit (12) ein piezoelektrisches Material (129A) beinhaltet, das in einem Außenumfang des Verbinders (11) vorgesehen ist und elektrischen Strom aus einer von außen aufgebrachten und mit einer Verformung einhergehenden Kollisionskraft erzeugt.

6. Wasserzulaufschlauch (1) nach Anspruch 1, **dadurch gekennzeichnet, dass**
die Stromerzeugungseinheit (12) eine hydroelektrische Stromerzeugungseinheit (12A) beinhaltet, umfassend:
eine Induktionsspule (121), die eine Vielzahl von Spulenabschnitten (121A) umfasst, die bezogen auf eine radiale Linie senkrecht zu einer Mittelachse des Verbinders (11) so gewickelt sind, dass die Spulenabschnitte (121A) in einer Umfangsrichtung in einem Außenumfang des Verbinders (11) vorgesehen sind,
einen Rotor (122), der entlang einer Innenumfangsfläche des Verbinders (11) vorgesehen ist und gedreht wird, wenn Wasser durch den Schlauch (10) fließt, und
eine Vielzahl von Permanentmagneten (123), die in einer Umfangsrichtung des Rotors (122) vorgesehen sind und jeweils Magnetfelder in der radialen Richtung erzeugen,
die hydroelektrische Stromerzeugungseinheit (12A) erzeugt elektrischen Strom, wenn Wasser durch den Schlauch (10) fließt und der Rotor (122) in einer einzigen Richtung gedreht wird,
die Induktionsspule (121) fungiert auch als eine Speisespule (125), die durch elektromagnetische Induktion mit elektrischem Strom versorgt wird, wobei der Verbinder (11) in einem von einer externen Vorrichtung erzeugten Wechselstrom-Magnetfeld vorgesehen ist, und
der über die als Speisespule (125) fungierende Induktionsspule (121) zugeführte elektrische Strom wird in der Sekundärbatterie (13) gespeichert.

7. Wasserzulaufschlauch (1) nach Anspruch 1, **dadurch gekennzeichnet, dass**
die Stromerzeugungseinheit (12) eine Vielzahl kugelförmiger Lichtstromerzeugungselemente (130) beinhaltet, die aus externem Licht elektrischen Strom erzeugen,
der Schlauch (10) einen Mantel (101) beinhaltet, der aus einem Garnmaterial (131) einschließlich der Lichtstromerzeugungselemente (130) gewebt ist, und eine Auskleidung (102) als ein Inneres des Mantels (101) vorgesehen ist, und in eine flache Form zusammengedrückt wird, die ein Paar gebogener Ohrabschnitte (10a) und ein Paar Bauchabschnitte (10b) zwischen den Ohrabschnitten (10a) in einem Zustand umfasst, in dem kein hydraulischer Druck innen aufgebracht wird, und
das Garnmaterial (131) einschließlich der Lichtstromerzeugungselemente (130) als Kette verwendet wird, die sich in einer Längsrichtung des Schlauchs (10) in den Bauchabschnitten (10b) erstreckt.

8. Wasserzulaufschlauch (1) nach Anspruch 1, **dadurch gekennzeichnet, dass**
die Stromerzeugungseinheit (12) ein elastisches Stromerzeugungselement (140) beinhaltet, das an dem Schlauch (10) angeschlossen ist und elektrischen Strom erzeugt, wenn sich der Schlauch (10) ausdehnt oder zusammenzieht oder vibriert,
der Schlauch (10) in einem Zustand, in dem kein hydraulischer Druck im Inneren des Schlauchs (10) aufgebracht wird, in eine flache Form zusammengedrückt wird, die ein Paar Ohrabschnitte (10a) und ein Paar Bauchabschnitte (10b) zwischen den Ohrabschnitten (10a) umfasst, und das elastische Stromerzeugungselement (140) in diesem Zustand keiner Belastung ausgesetzt ist, und
in einem Zustand, in dem hydraulischer Druck im Inneren des Schlauchs (10) aufgebracht wird, sich der Schlauch (10) so ausdehnt, dass seine Querschnittsfläche kreisförmig und das elastische Stromerzeugungselement (140) erstreckt ist, wodurch elektrischer Strom erzeugt wird.

9. Wasserzulaufschlauch (1) nach Anspruch 1, **dadurch gekennzeichnet, dass**
die Stromerzeugungseinheit (12) ein thermoelektrisches Element (160) beinhaltet, umfassend:
eine erste Fläche (160a), die dem Schlauch (10) zugewandt ist;
eine zweite Fläche (160b) auf einer Seite gegenüber der ersten Fläche (160a);
eine Negativelektrode (166), die auf der ersten Fläche (160a) vorgesehen ist;
eine Positivelektrode (165), die auf der zweiten Fläche (160b) vorgesehen ist;
einen Halbleiter vom n-Typ (163), der mit der Negativelektrode (166) und der Positivelektrode (165) verbunden ist; und
einen Halbleiter vom p-Typ (164), der mit der Negativelektrode (166) und der Positivelektrode (165) verbunden ist, und
das thermoelektrische Element (160) erzeugt elektrischen Strom aus einem Temperaturunterschied zwischen der ersten Fläche (160a) und der zweiten Fläche (160b) in einem Zustand, in dem eine niedrige Temperatur der ersten Fläche (160a) durch Wasser, das durch den Schlauch (10) fließt, hergestellt wird, und eine hohe Temperatur der zweiten Fläche (160b) durch externe Wärme hergestellt wird.

10. Wasserzulaufschlauch (1) nach einem der Ansprüche 1 bis 9, **dadurch gekennzeichnet, dass**
die Lichtquellen (151) in einer Umfangsrichtung auf einer Außenfläche des Verbinders (11) angeordnet sind.

11. Wasserzulaufschlauch (1) nach einem der Ansprüche 1 bis 9, **dadurch gekennzeichnet, dass**
die Lichtquellen (151) in einer axialen Richtung auf einer Außenfläche des Verbinders (11) angeordnet sind.

12. Wasserzulaufschlauch (1) nach einem der Ansprüche 1 bis 11, **dadurch gekennzeichnet, dass**
die elektronische Einheit (15) beinhaltet:
mindestens einen von einem Temperatursensor (157A), der eine Temperatur des Verbinders (11) misst, einem Wassertemperatursensor (157B), der eine Temperatur von Wasser, das durch den Schlauch (10) fließt, misst, einem Durchflusssensor (157C), der eine Durchflussrate von Wasser, das durch den Schlauch (10) fließt, misst, und einem Drucksensor (157D), der einen Druck im Inneren des Schlauchs (10) misst,
eine Steuereinheit (155), die Zustandsinformationen ausgibt, die einen Wert beinhalten, der von mindestens einem von dem Temperatursensor (157A), dem Wassertemperatursensor (157B), dem Durchflusssensor (157C) und dem Drucksensor (157D) gemessen wird, und
eine Anzeigeeinheit (158), die außen an dem Verbinder (11) fixiert ist und die Zustandsinformationen anzeigt.

13. Wasserzulaufschlauch (1) nach einem der Ansprüche 1 bis 12, **dadurch gekennzeichnet, dass**
die elektronische Einheit (15) beinhaltet:
einen Speicher (154), der individuelle Identifikationsinformationen des Verbinders (11) speichert;
eine Steuereinheit (155), die Verbindungsinformationen ausgibt, in denen die individuellen Identifikationsinformationen dem Verbindungssignal zugeordnet sind, und
eine Kommunikationseinheit (156), die die Verbindungsinformationen drahtlos überträgt;

14. Wasserzulaufschlauch (1) nach Anspruch 13, **dadurch gekennzeichnet, dass**
die Steuereinheit (155) die Verbindungsinformationen ausgibt, wenn über die Kommunikationseinheit (156) ein Steuersignal von außen empfangen wird.

15. Wasserzulaufschlauch (1) nach einem der Ansprüche 1 bis 11, **dadurch gekennzeichnet, dass**
die elektronische Einheit (15) beinhaltet:
mindestens einen von einem Temperatursensor (157A), der eine Temperatur des Verbinders (11) misst, einem Wassertemperatursensor (157B), der eine Temperatur von Wasser, das durch den Schlauch (10) fließt, misst, einem Durchflusssensor (157C), der eine Durchflussrate von Wasser, das durch den Schlauch (10) fließt, misst, und einem Drucksensor (157D), der einen Druck im Inneren des Schlauchs (10) misst;
einen Speicher (154), der individuelle Identifikationsinformationen des Verbinders (11) speichert;
eine Steuereinheit (155), die Zustandsinformationen ausgibt, in denen ein Wert gemessen von mindestens einem von dem Temperatursensor (157A), dem Wassertemperatursensor (157B), dem Durchflusssensor (157C) und dem Drucksensor (157D) den individuellen Identifikationsinformationen zugeordnet ist; und
eine Kommunikationseinheit (156), die die Zustandsinformationen drahtlos überträgt.

16. Wasserzulaufschlauch (1) nach Anspruch 15, **dadurch gekennzeichnet, dass**
die Steuereinheit (155) die Zustandsinformationen ausgibt, wenn über die Kommunikationseinheit (156) ein Steuersignal von außen empfangen wird.

17. Wasserzulaufschlauch (1) nach einem der Ansprüche 13 bis 16, **dadurch gekennzeichnet, dass**
die elektronische Einheit (15) arbeitet, wenn von außen über die Kommunikationseinheit (156) ein Aktivierungssignal empfangen wird, und die elektronische Einheit (15) in einen Standby-Zustand übergeht, in dem der Stromverbrauch, der nicht der Stromverbrauch für den Empfang in der Kommunikationseinheit (156) ist, reduziert wird, wenn von außen über die Kommunikationseinheit (156) ein Standby-Signal empfangen wird.

18. Wasserzulaufschlauch (1) nach einem der Ansprüche 13 bis 17, **dadurch gekennzeichnet, dass**
die elektronische Einheit (15) eine Positioniereinheit (159) beinhaltet, die Positionskoordinaten basierend auf einem GPS-Signal oder einem von einer umgebenden WLAN-Basis erhaltenen Signal berechnet und ausgibt,
die Steuereinheit (155) Standortinformationen ausgibt, in denen die individuellen Identifikationsinformationen den Positionskoordinaten zugeordnet sind, und
die Kommunikationseinheit (156) die Standortinformationen überträgt.

## Revendications

1. Tuyau d'alimentation en eau (1) comprenant :
un tuyau (10) ;
un connecteur (11) fixé à une partie d'extrémité du tuyau (10) ;
une unité de génération d'énergie (12) qui génère de l'énergie électrique dans un état dans lequel elle est fixée au connecteur (11) ou au tuyau (10) ;
une batterie rechargeable (13) chargée avec l'énergie électrique générée par l'unité de génération d'énergie (12) ;
un circuit d'alimentation électrique (14) qui fournit, à un courant et à une tension prédéterminés, l'énergie électrique stockée dans la batterie rechargeable (13) ou l'énergie électrique générée par l'unité de génération d'énergie (12) ;
une unité électronique (15) qui fonctionne avec l'alimentation électrique fournie via le circuit d'alimentation électrique (14), **caractérisé par** :
un commutateur principal (16) qui commute le circuit d'alimentation électrique (14) à un état dans lequel l'énergie électrique est fournie à l'unité électronique (15),
dans lequel :
l'unité électronique (15) comprend :
une source de lumière (151) comprenant au moins l'un parmi une LED et un EL organique ;
une unité de commande d'émission de lumière (152) qui commande un motif pour amener la source de lumière à émettre de la lumière (151) ; et
un commutateur de détection de raccordement (153) qui produit un signal de raccordement lorsqu'un connecteur de côté opposé (11) monté dans le connecteur (11) est raccordé, et
l'unité de commande d'émission de lumière (152) modifie le motif pour amener la source de lumière (151) à émettre de la lumière lorsque le signal de raccordement est détecté.

2. Tuyau d'alimentation en eau (1) selon la revendication 1, **caractérisé en ce que** :
l'unité de génération d'énergie (12) comprend une unité de génération d'énergie hydroélectrique (12A) comprenant :
une bobine d'induction (121) comprenant une pluralité de parties hélicoïdales (121A) enroulées sur la base d'une ligne radiale perpendiculaire à un axe central du connecteur (11) de sorte que les parties hélicoïdales (121A) sont prévues dans une direction circonférentielle dans une circonférence externe du connecteur (11) ;
un rotor (122) prévu de manière rotative le long d'une surface circonférentielle interne du connecteur (11) et comprenant une partie cylindrique (122A) comprenant une structure pour empêcher le rotor (122) d'être emporté par un flux d'eau dans une direction le long de l'axe central pour le connecteur (11), la structure étant prévue sur un côté de surface circonférentielle externe ;
une pluralité d'aimants permanents (123) prévus dans une direction circonférentielle sur une surface circonférentielle externe de la partie cylindrique (122A) et générant des champs magnétiques, respectivement, dans la direction radiale ; et
une pluralité de nervures (124) prévues le long d'une surface circonférentielle interne de la partie cylindrique (122A) et inclinées dans une direction circonférentielle à partir d'une position parallèle à l'axe central,
un élément pour empêcher le rotor (122) d'être emporté par le connecteur (11) n'est pas prévu à l'intérieur de la partie cylindrique (122A), et
l'unité de génération d'énergie hydroélectrique (12A) génère l'énergie électrique lorsque l'eau s'écoule dans le tuyau (10) et que le rotor (122) tourne dans une seule direction.

3. Tuyau d'alimentation en eau (1) selon la revendication 1, **caractérisé en ce que** :
l'unité de génération d'énergie (12) comprend une unité de génération d'énergie vibratoire (12B) comprenant :
une bobine d'induction (121) fixée sur le connecteur (11) ;
un élément mobile (126) qui est mobile dans une direction traversant une ligne centrale d'enroulement de la bobine d'induction (121) ;
un aimant permanent (123) monté sur l'élément mobile (126) de sorte qu'une ligne de force magnétique est le long de la ligne centrale d'enroulement de la bobine d'induction (121) ; et
un élément élastique (127) raccordant l'élément mobile (126) au connecteur (11) afin de vibrer dans une direction dans laquelle un champ magnétique pour la bobine d'induction (121) change, et
l'unité de génération d'énergie vibratoire (12B) génère l'énergie électrique à partir du déplacement de l'élément mobile (126) dû à la vibration du connecteur (11).

4. Tuyau d'alimentation en eau (1) selon la revendication 1, **caractérisé en ce que** :
l'unité de génération d'énergie (12) comprend un élément piézoélectrique (129) qui génère l'énergie électrique à partir d'une charge de collision appliquée lorsqu'un connecteur de côté opposé monté dans le connecteur (11) est raccordé au connecteur (11).

5. Tuyau d'alimentation en eau (1) selon la revendication 1, **caractérisé en ce que** :
l'unité de génération d'énergie (12) comprend un matériau piézoélectrique (129A) prévu dans une circonférence externe du connecteur (11) et générant l'énergie électrique à partir d'une charge de collision appliquée à partir de l'extérieur et accompagnée par la déformation.

6. Tuyau d'alimentation en eau (1) selon la revendication 1, **caractérisé en ce que** :
l'unité de génération d'énergie (12) comprend une unité de génération d'énergie hydroélectrique (12A) comprenant :
une bobine d'induction (121) comprenant une pluralité de parties hélicoïdales (121A) enroulées sur la base d'une ligne radiale perpendiculaire à un axe central du connecteur (11) de sorte que les parties hélicoïdales (121A) sont prévues dans une direction circonférentielle dans une circonférence externe du connecteur (11) ;
un rotor (122) prévu le long d'une surface circonférentielle interne du connecteur (11) et entraîné en rotation lorsque l'eau s'écoule dans le tuyau (10) ; et
une pluralité d'aimants permanents (123) prévus dans une direction circonférentielle du rotor (122) et générant des champs magnétiques, respectivement, dans la direction radiale,
l'unité de génération d'énergie hydroélectrique (12A) génère l'énergie électrique lorsque l'eau s'écoule dans le tuyau (10) et que le rotor (122) tourne dans une seule direction,
la bobine d'induction (121) sert également de bobine d'alimentation (125) alimentée avec l'énergie électrique par induction électromagnétique alors que le connecteur (11) est prévu dans un champ magnétique AC généré par un dispositif externe, et
l'énergie électrique fournie via la bobine d'induction (121) servant de bobine d'alimentation (125) est stockée dans la batterie rechargeable (13).

7. Tuyau d'alimentation en eau (1) selon la revendication 1, **caractérisé en ce que** :
l'unité de génération d'énergie (12) comprend une pluralité d'éléments de génération d'énergie lumineuse de type balle (130) qui génèrent de l'énergie électrique à partir de la lumière externe,
le tuyau (10) comprend une gaine (101) tissée à partir d'un matériau de fil (131) comprenant les éléments de génération d'énergie lumineuse (130) et un revêtement (102) prévu en tant qu'intérieur de la gaine (101) et est écrasé selon une forme plate comprenant une paire de parties d'oreille pliées (10a) et une paire de parties d'abdomen (10b) entre les parties d'oreille (10a) dans un état dans lequel aucune pression hydraulique n'est appliquée à l'intérieur, et
le matériau de fil (131) comprenant les éléments de génération d'énergie lumineuse (130) est utilisé en tant que chaîne s'étendant dans une direction de longueur du tuyau (10) dans les parties d'abdomen (10b).

8. Tuyau d'alimentation en eau (1) selon la revendication 1, **caractérisé en ce que** :
l'unité de génération d'énergie (12) comprend un élément de génération d'énergie élastique (140) fixé au tuyau (10) et générant l'énergie électrique lorsque le tuyau (10) se dilate ou se rétracte ou vibre,
le tuyau (10) est écrasé en une forme plate comprenant une paire de parties d'oreille (10a) et une paire de parties d'abdomen (10b) entre les parties d'oreille (10a) dans un état dans lequel aucune pression hydraulique n'est appliquée à l'intérieur du tuyau (10) et aucune tension n'est appliquée sur l'élément de génération d'énergie élastique (140) dans cet état, et
dans un état dans lequel la pression hydraulique est appliquée à l'intérieur du tuyau (10), le tuyau (10) se dilate de sorte que sa surface transversale est circulaire, et l'élément de génération d'énergie élastique (140) est étendu, générant ainsi l'énergie électrique.

9. Tuyau d'alimentation en eau (1) selon la revendication 1, **caractérisé en ce que** :
l'unité de génération d'énergie (12) comprend un élément thermoélectrique (160) comprenant :
une première surface (160a) faisant face au tuyau (10) ;
une seconde surface (160b) sur un côté opposé à la première surface (160a) ;
une électrode négative (166) prévue sur la première surface (160a) ;
une électrode positive (165) prévue sur la seconde surface (160b) ;
un semi-conducteur de type n (163) raccordé à l'électrode négative (166) et à l'électrode positive (165) ; et
un semi-conducteur de type p (164) raccordé à l'électrode négative (166) et à l'électrode positive (165), et
l'élément thermoélectrique (160) génère l'énergie électrique à partir d'une différence de température entre la première surface (160a) et la seconde surface (160b) dans un état dans lequel une température de la première surface (160a) est abaissée par l'eau qui s'écoule dans le tuyau (10) et une température de la seconde surface (160b) est élevée par la chaleur externe.

10. Tuyau d'alimentation en eau (1) selon l'une quelconque des revendications 1 à 9, **caractérisé en ce que** :
les sources de lumière (151) sont agencées dans une direction circonférentielle sur une surface externe du connecteur (11).

11. Tuyau d'alimentation en eau (1) selon l'une quelconque des revendications 1 à 9, **caractérisé en ce que** :
les sources de lumière (151) sont agencées dans une direction axiale sur une surface externe du connecteur (11).

12. Tuyau d'alimentation en eau (1) selon l'une des revendications 1 à 11, **caractérisé en ce que** :
l'unité électronique (15) comprend :
au moins un parmi un capteur de température (157A) qui mesure une température du connecteur (11), un capteur de température d'eau (157B) qui mesure une température d'eau s'écoulant dans le tuyau (10), un capteur de débit (157C) qui mesure un débit de l'eau s'écoulant dans le tuyau (10), et un capteur de pression (157D) qui mesure une pression à l'intérieur du tuyau (10) ;
une unité de commande (155) qui produit une information d'état comprenant une valeur mesurée par au moins l'un parmi le capteur de température (157A), le capteur de température d'eau (157B), le capteur de débit (157C) et le capteur de pression (157D) ; et
une unité d'affichage (158) fixée à l'extérieur du connecteur (11) et affichant l'information d'état.

13. Tuyau d'alimentation en eau (1) selon l'une des revendications 1 à 12, **caractérisé en ce que** :
l'unité électronique (15) comprend :
une mémoire (154) qui stocke une information d'identification individuelle du connecteur (11) ;
une unité de commande (155) qui produit l'information de raccordement dans laquelle l'information d'identification individuelle est associée au signal de raccordement ; et
une unité de communication (156) qui transmet, sans fil, l'information de raccordement.

14. Tuyau d'alimentation en eau (1) selon la revendication 13, **caractérisé en ce que** :
l'unité de commande (155) produit l'information de raccordement lorsqu'un signal de commande est reçu de l'extérieur via l'unité de communication (156).

15. Tuyau d'alimentation en eau (1) selon l'une des revendications 1 à 11, **caractérisé en ce que** :
l'unité électronique (15) comprend :
au moins l'un parmi un capteur de température (157A) qui mesure une température du connecteur (11), un capteur de température d'eau (157B) qui mesure une température de l'eau s'écoulant dans le tuyau (10), un capteur de débit (157C) qui mesure un débit de l'eau s'écoulant dans le tuyau (10), et un capteur de pression (157D) qui mesure une pression à l'intérieur du tuyau (10) ;
une mémoire (154) qui stocke l'information d'identification individuelle du connecteur (11) ;
une unité de commande (155) qui produit l'information d'état dans laquelle une valeur mesurée par au moins l'un parmi le capteur de température (157A), le capteur de température d'eau (157B), le capteur de débit (157C) et le capteur de pression (157D) est associé à l'information d'identification individuelle ; et
une unité de communication (156) qui transmet, sans fil, l'information d'état.

16. Tuyau d'alimentation en eau (1) selon la revendication 15, **caractérisé en ce que** :
l'unité de commande (155) produit l'information d'état lorsqu'un signal de commande est reçu depuis l'extérieur via l'unité de communication (156).

17. Tuyau d'alimentation en eau (1) selon l'une des revendications 13 à 16, **caractérisé en ce que** :
l'unité électronique (15) fonctionne lorsqu'un signal d'activation est reçu depuis l'extérieur via l'unité de communication (156), et l'unité électronique (15) transitionne à l'état d'attente dans lequel la consommation d'énergie différente de la consommation d'énergie pour la réception dans l'unité de communication (156) est réduite lorsqu'un signal d'attente est reçu depuis l'extérieur via l'unité de communication (156).

18. Tuyau d'alimentation en eau (1) selon l'une des revendications 13 à 17, **caractérisé en ce que** :
l'unité électronique (15) comprend une unité de positionnement (159) qui calcule et produit des coordonnées de position sur la base d'un signal GPS ou d'un signal obtenu à partir d'une base Wi-Fi périphérique,
l'unité de commande (155) produit l'information d'emplacement dans laquelle l'information d'identification individuelle est associée aux coordonnées de position, et
l'unité de communication (156) transmet l'information d'emplacement.
